# EUROPEAN PATENT APPLICATION

(11) **EP 4 770 110 A1**
(43) Date of publication of application: **01.07.2026**
(21) Application number: 24926447.4
(22) Date of filing: 29.02.2024
(51) Int. Cl.: H04N 23/667

(54) **DATA PROCESSING METHOD AND ELECTRONIC DEVICE**

(71) Applicant: Honor Device Co., Ltd., Shenzhen, Guangdong 518040 (CN)
(72) Inventor: DU, Yawen, Shenzhen, Guangdong 518040 (CN)
(74) Representative: Goddar, Heinz J.
(86) International application number: PCT/CN2024/079481
(87) International publication number: WO 2025/179568

(57) **Abstract**

Embodiments of this application provide a data processing method and an electronic device, and relate to the field of electronic device technologies. The method can effectively reduce a display lag due to image output mode switching. The method may include: starting a camera application at a first moment. An image sensor performs image output based on a first image output mode and a first exposure duration. First control information is obtained at a second moment. The first control information includes a first image output parameter. The first image output parameter includes a second exposure duration and a second image output mode. The second exposure duration is less than the first exposure duration. The second image output mode is different from the first image output mode. The second moment is later than the first moment. The image sensor performs exposure based on the second exposure duration at a third moment. The image sensor performs image output based on the second image output mode at a fourth moment.

## Description

### TECHNICAL FIELD

Embodiments of this application relate to the field of electronic device technologies, and in particular, to a data processing method and an electronic device.

### BACKGROUND

An electronic device may control a camera to provide a shooting function by using a camera application. An image sensor may be disposed in the camera, and is configured to convert an optical signal into an electrical signal. The image sensor may work based on a configured image output mode. Different image output modes may correspond to different shooting scenes. Therefore, in different scenes, the image sensor may obtain a corresponding image based on a corresponding image output mode.

When the shooting scene changes, the electronic device may control the image sensor to switch an image output mode. In an existing solution implementation, after the electronic device generates an indication of switching an image output mode, a display lag problem occurs.

### SUMMARY

This application provides a data processing method and an electronic device. This can effectively reduce a display lag due to image output mode switching.

To achieve the foregoing technical objective, this application adopts the following technical solutions.

According to a first aspect, a data processing method is provided, and is applied to an electronic device. The electronic device includes a camera application and an image sensor. The method includes: starting the camera application at a first moment. The image sensor performs image output based on a first image output mode and a first exposure duration. First control information is obtained at a second moment. The first control information includes a first image output parameter. The first image output parameter includes a second exposure duration and a second image output mode. The second exposure duration is less than the first exposure duration. The second image output mode is different from the first image output mode. The second moment is later than the first moment. The image sensor performs exposure based on the second exposure duration at a third moment. The third moment is later than the second moment. The image sensor performs image output based on the second image output mode at a fourth moment. The fourth moment is later than the third moment.

Based on this solution, the electronic device may output the image in the second image output mode by using the shorter first exposure duration. In this way, a display time of a final frame of image that is output on a display based on the first image output mode is shortened, to optimize a lag problem occurring during image output mode switching.

Optionally, that the image sensor performs image output based on the second image output mode includes: the image sensor outputs an N^{th} frame of image based on the second image output mode, where the first exposure duration is the same as an exposure duration of an (N-1)^{th} frame, and the N^{th} frame of image is a 1^{st} frame of image output by the image sensor after switching to the second image output mode.

Optionally, the second moment is earlier than a moment corresponding to a SOF (start of frame) of the (N-1)^{th} frame of image.

Optionally, the third moment is between a moment corresponding to an EOF (end of frame) of the (N-1)^{th} frame of image and a moment corresponding to a SOF of the N^{th} frame of image.

Optionally, the fourth moment is a moment corresponding to the SOF of the N^{th} frame of image.

Optionally, the first control information corresponds to information of a request N+1.

Through the foregoing optional implementation, after the solution provided in this example takes effect, an exposure duration of the N^{th} frame of image is shortened, thereby reducing a display time of the (N-1)^{th} frame of image on the display. In this way, a lag caused due to long-time display of the (N-1)^{th} frame of image on the display can be optimized. In addition, through the foregoing possible designs, each operation processing occasion in this example is also specifically limited.

Optionally, the method further includes: writing the first control information into a first register at a fifth moment, where the first register is a register of the image sensor, the fifth moment is later than the second moment, and the fifth moment is earlier than the third moment.

Optionally, the first control information includes a first address and a first value, the first address is an address at which the image sensor stores an exposure duration, and the first value corresponds to the second exposure duration. Writing the first control information into the first register includes: writing the first value at the first address of the first register.

Optionally, the fifth moment is between the moment corresponding to the SOF of the (N-1)^{th} frame of image and a moment corresponding to an EOF.

Optionally, the electronic device is configured with a camera request management module CRM. Obtaining the first control information includes: the CRM obtains the first control information at the second moment. Writing the first control information into the first register includes: the CRM writes the first control information into the first register at the fifth moment.

Therefore, the electronic device may write a shortened exposure duration into the register according to an effectiveness time sequence by using the CRM. An image output parameter of a switching frame when seamless switching is triggered is one-frame effective. In this way, through the foregoing solution implementation, in an image output process of the (N-1)^{th} frame of image, the shortened exposure duration is written into the register, so that the sensor can use the shortened exposure duration of exposure of the N^{th} frame of image.

Optionally, before generating the first control information, the method further includes: determining the second exposure duration.

Optionally, before determining the second exposure duration, the method further includes: obtaining the first exposure duration. Determining the second exposure duration includes: determining the second exposure duration based on the first exposure duration, so that the second exposure duration is less than the first exposure duration.

Optionally, the method further includes: obtaining a first exposure gain, where the first exposure gain is an exposure gain used when the image sensor performs image output based on the first image output mode. Determining the second exposure duration based on the first exposure duration includes: determining the second exposure duration based on the first exposure duration and the first exposure gain.

Optionally, the first control information further includes a second exposure gain, and a product of the second exposure gain and the second exposure duration is equal to a product of the first exposure gain and the first exposure duration. That the image sensor performs exposure based on the second exposure duration includes: the image sensor performs exposure based on the second exposure duration and the second exposure gain.

Optionally, the second exposure gain is a maximum exposure gain of the image sensor.

Therefore, several different solutions for determining the shortened exposure duration are provided. It should be noted that in the foregoing possible implementation, the second exposure duration is not limitlessly shortened. In the foregoing solution, it can be learned that, before and after the exposure duration is shortened, a total exposure amount (that is, an exposure duration multiplied by an exposure gain) remains unchanged. In this way, when an exposure duration can be shortened, abnormal impact of shortening the exposure duration on image exposure can be avoided.

According to a second aspect, a data processing method is provided, and is applied to an electronic device. The electronic device includes a camera application and an image sensor. The method includes: starting the camera application at a first moment. The image sensor performs image output based on a first image output mode. First control information is obtained at a second moment. The first control information includes a first image output parameter. The first image output parameter includes a first frame length and a second image output mode. The first frame length is less than a second frame length. The second frame length is a frame length that is configured for the image sensor and that is for image output based on the second image output mode. The second image output mode is different from the first image output mode. The second moment is later than the first moment. The image sensor performs image output based on the second image output mode and the first frame length at a fourth moment. The fourth moment is later than the third moment.

Based on this solution, a solution for shortening a display duration of a 1^{st} frame of image on the display after image output switching is provided. In this solution, a frame length of the 1^{st} frame of image that is output based on the second image output mode can be shortened. It may be understood that the first frame of image is not displayed. After image output mode switching, an image actually displayed on the display is a 2^{nd} frame of image output after image output mode switching. Therefore, shortening the frame length of the 1^{st} frame of image can effectively control the display duration of displaying the 1^{st} frame of image on the display without affecting image quality.

Optionally, the fourth moment is a moment corresponding to the SOF of the N^{th} frame of image. The second frame length is a frame length that is configured for the image sensor and that is for outputting the N^{th} frame of image based on the second image output mode. That the image sensor performs image output based on the second image output mode and the first frame length includes: the image sensor outputs the N^{th} frame of image based on the second image output mode and the first frame length, where the N^{th} frame of image is a 1^{st} frame of image output by the image sensor after switching to the second image output mode.

Optionally, the second moment is earlier than a moment corresponding to a SOF of the (N-1)^{th} frame of image.

Optionally, the first control information corresponds to information of a request N+1.

Based on the solution implementation, it is determined that an initial frame after image output mode switching may be the N^{th} frame. In this way, a frame length of the N^{th} frame can be controlled, so that an image output duration of the N^{th} frame is shortened. Correspondingly, because a display duration of the (N+1)^{th} frame of image on the display corresponds to the image output duration of the N^{th} frame and an image output duration of the (N+1)^{th} frame, a display duration of the (N+1)^{th} frame on the display can be effectively shortened. Further, a lag problem after image output mode switching is optimized.

It should be noted that a "configured" frame length may be interpreted as a default frame length in this example, for example, the configured frame length of the N^{th} frame during image output, that is, the default frame length of the N^{th} frame during image output.

Optionally, the method further includes: writing the first control information into a first register at a fifth moment, where the first register is a register of the image sensor, the fifth moment is later than the second moment, and the fifth moment is earlier than the third moment.

Optionally, the first control information includes a second address and a second value, the second address is an address at which the image sensor stores a frame length, and the second value corresponds to the first frame length. Writing the first control information into the first register includes: writing the second value at the second address of the first register.

Optionally, the electronic device is configured with a camera request management module CRM. Obtaining the first control information includes: the CRM obtains the first control information at the second moment. Writing the first control information into the first register includes: the CRM writes the first control information into the first register at the fifth moment.

Optionally, the fifth moment is between the moment corresponding to the SOF of the (N-1)^{th} frame of image and a moment corresponding to an EOF.

In this example, the following solution is further used for implementation. A specific method for determining a shortened first frame length is provided.

Optionally, the first frame length is less than the second frame length, and the first frame length is greater than or equal to a half of the second frame length.

Optionally, before generating the first control information, the method further includes: determining the first frame length.

Optionally, before determining the first frame length, the method further includes: obtaining the second frame length. Determining the first frame length includes: determining the first frame length based on the second frame length.

Optionally, obtaining the second frame length includes: reading a parameter configuration file, and obtaining the second frame length, where the parameter configuration file is stored in the electronic device.

Optionally, determining the first frame length based on the second frame length includes: determining a half of the second frame length as the first frame length.

Through the foregoing solution example, the frame length of the N^{th} frame of image is controlled. In the following implementation, the frame length of the (N+1)^{th} frame of image may be further controlled, thereby further shortening the display duration of the (N+1)^{th} frame.

Optionally, the method further includes: generating second control information at a sixth moment, where the second control information includes a second image output parameter, the second image output parameter includes a third frame length, the third frame length is less than a fourth frame length, the fourth frame length is a frame length that is configured for the image sensor and that is for outputting an (N+1)^{th} frame of image based on the second image output mode, and the sixth moment is later than the second moment. The image sensor outputs the (N+1)^{th} frame of image based on the second image output mode and the third frame length at a seventh moment, where the seventh moment is later than the fourth moment.

Optionally, the third frame length is greater than or equal to a half of the fourth frame length.

Optionally, the sixth moment is earlier than the moment corresponding to the SOF of the N^{th} frame of image.

Optionally, the seventh moment is a moment corresponding to a SOF of the (N+1)^{th} frame of image.

Optionally, the method further includes: writing the third frame length into a register of the image sensor at an eighth moment, where the eighth moment is between the moment corresponding to the SOF of the N^{th} frame of image and a moment corresponding to an EOF.

Optionally, the second control information corresponds to information of a request N+2.

It may be understood that, in some other embodiments, the frame length of the N^{th} frame may be not controlled, and only the frame length of the (N+1)^{th} frame is controlled. For example, the frame length of the (N+1)^{th} frame is shortened. In this way, the display duration of the (N+1)^{th} frame on the display can also be shortened, to optimize a lag.

According to a third aspect, an electronic device is provided. The electronic device includes a memory, one or more processors, and one or more cameras. Each camera is configured with a corresponding image sensor. The memory is coupled to the processor and the image sensor. The memory is configured to store computer program code. The computer program code includes computer instructions. When the processor executes the computer instructions, the electronic device performs the method provided in the first aspect and any possible design thereof, and/or performs the method provided in the second aspect and any possible design thereof, to control the image sensor to output an image. In some implementations, the electronic device is further configured with one or more displays. In this way, through the solution implementation provided in embodiments of this application, a lag of an image flow (for example, a preview flow) displayed on a display before and after seamless switching can be effectively controlled.

According to a fourth aspect, this application further provides a chip system. The chip system is applied to an electronic device. The chip system may include one or more interface circuits and one or more processors. The interface circuit and the processor are connected to each other through lines. The interface circuit is configured to receive a signal from a memory of the electronic device and transmit the signal to the processor. The signal includes computer instructions stored in the memory. When the processor executes the computer instructions, the electronic device performs the method provided in the first aspect and any possible design thereof, and/or performs the method provided in the second aspect and any possible design thereof, to control an image sensor to output an image.

According to a fifth aspect, this application further provides a computer-readable storage medium including computer instructions. When the computer instructions are run on an electronic device, the electronic device is enabled to perform the method provided in the first aspect and any possible design thereof, and/or perform the method provided in the second aspect and any possible design thereof, to control an image sensor to output an image.

According to a sixth aspect, this application further provides a computer program product. When the computer program product runs on a computer, the computer is enabled to perform the method provided in the first aspect and any possible design thereof, and/or perform the method provided in the second aspect and any possible design thereof, to control an image sensor to output an image.

It may be understood that the solutions provided in the third aspect to the sixth aspect provided in this application may separately correspond to the first aspect and any possible design thereof, and/or the second aspect and any possible design thereof. Therefore, beneficial effects that can be achieved are similar. Details are not described herein again.

### BRIEF DESCRIPTION OF DRAWINGS

FIG. 1A and FIG. 1B are an interface interaction diagram;
FIG. 2 is a composition diagram of an electronic device according to an embodiment of this application;
FIG. 3 is a schematic flowchart of inter-module interaction according to an embodiment of this application;
FIG. 4 is a diagram of a time sequence of inter-module instruction transmission according to an embodiment of this application;
FIG. 5 is a diagram of image output mode switching according to an embodiment of this application;
FIG. 6 is a diagram of image output mode switching according to an embodiment of this application;
FIG. 7 is a diagram of a time sequence of inter-module instruction transmission according to an embodiment of this application;
FIG. 8 is a diagram of comparison before and after a solution takes effect according to an embodiment of this application;
FIG. 9A, FIG. 9B, and FIG. 9C are a diagram of inter-module interaction according to an embodiment of this application;
FIG. 10 is a diagram of comparison before and after a solution takes effect according to an embodiment of this application;
FIG. 11A, FIG. 11B, FIG. 11C, and FIG. 11D are a diagram of inter-module interaction according to an embodiment of this application;
FIG. 12 is a composition diagram of an electronic device according to an embodiment of this application;
FIG. 13 is a composition diagram of an electronic device according to an embodiment of this application; and
FIG. 14 is a composition diagram of a chip system according to an embodiment of this application.

### DESCRIPTION OF EMBODIMENTS

In the following description, the terms "first" and "second" are merely intended for a purpose of description, and shall not be interpreted as indicating or implying relative importance or implying a quantity of indicated technical features. Therefore, features defined by using "first" and "second" may explicitly or implicitly include one or more such features. In the descriptions of embodiments, unless otherwise specified, "a plurality of" means two or more.

An electronic device may provide a shooting function for a user by using software and hardware configured in the electronic device.

For example, the software configured in the electronic device may include a camera application. The hardware may include one or more cameras.

For example, the electronic device is a mobile phone.

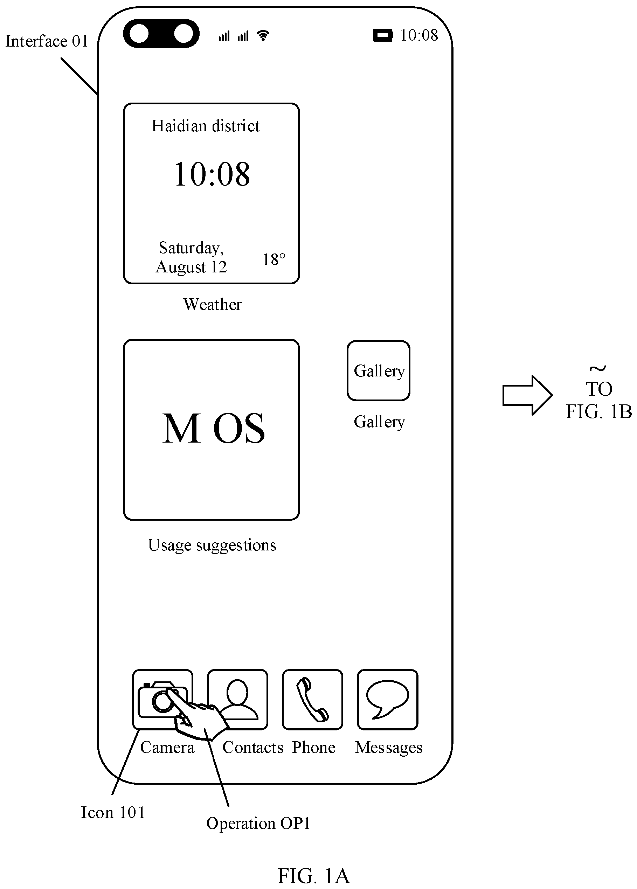

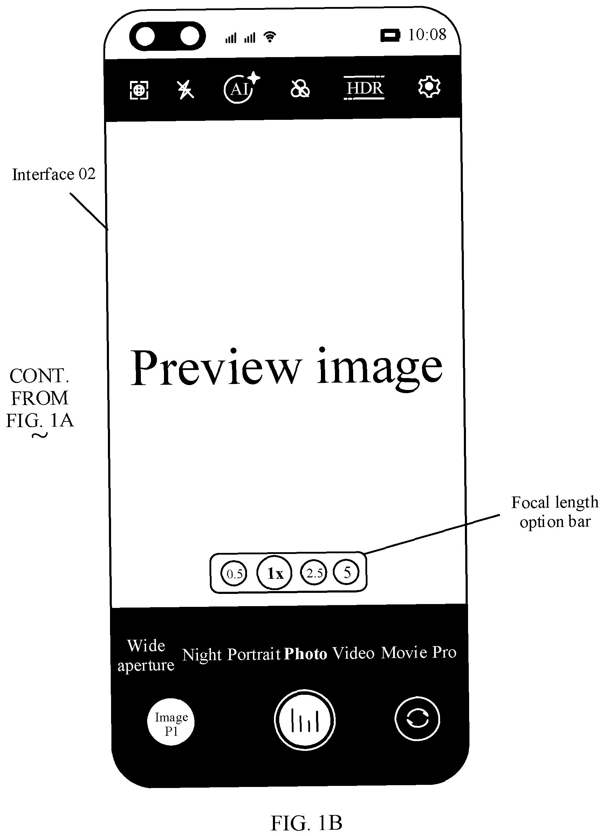

With reference to FIG. 1A and FIG. 1B, an example of interface interaction is provided. By using the example of interface interaction shown in FIG. 1A and FIG. 1B, the electronic device may provide a shooting function for a user according to an indication of the user.

As shown in FIG. 1A, the electronic device may display an interface 01. The interface 01 may be a main interface of the electronic device. The interface 01 may include an icon of one or more installed applications. For example, the interface 01 may include an icon 101 of a camera application.

The user may input a tap operation to the icon 101 to indicate the electronic device to run the camera application.

Correspondingly, the electronic device may run the camera application, and switch to and display an interface of the camera application.

In the example of FIG. 1B, the interface of the camera application may include an interface 02. In the interface 02, the electronic device may display a preview image to the user. The interface 02 may further include one or more functional buttons. For example, a current focal length and an optional focal length are displayed in a focal length option bar. For another example, a current shooting mode is displayed in a lower part of the interface 02. The shooting mode may include "photo", "video", and the like.

Before the preview image is displayed in the interface 02, the electronic device may obtain image data (for example, a RAW diagram) by using a camera according to an instruction delivered by the camera application. The electronic device may further process the RAW image, to obtain a corresponding to-be-displayed image. In this way, when the preview image needs to be displayed in the interface 02, a display of the electronic device may perform display based on the to-be-displayed image.

In this application, the camera may include components such as a lens and an image sensor. The lens is configured to obtain an optical signal, and the image sensor is configured to convert the optical signal into an electrical signal. The electrical signal may include display information (such as a color and a gray scale) indicating each pixel in the RAW diagram. That the image sensor generates the electrical signal may also be referred to as image output.

In this way, once the image sensor of the camera performs image output, the electronic device can process and obtain a corresponding to-be-displayed frame of image. In this cycle, the electronic device can obtain a plurality of consecutive frames of images through controlling the image sensor to perform image output for a plurality of times. On this basis, the electronic device may display consecutive preview images to the user on the display.

In the following description, the image sensor is referred to as a sensor or a Sensor.

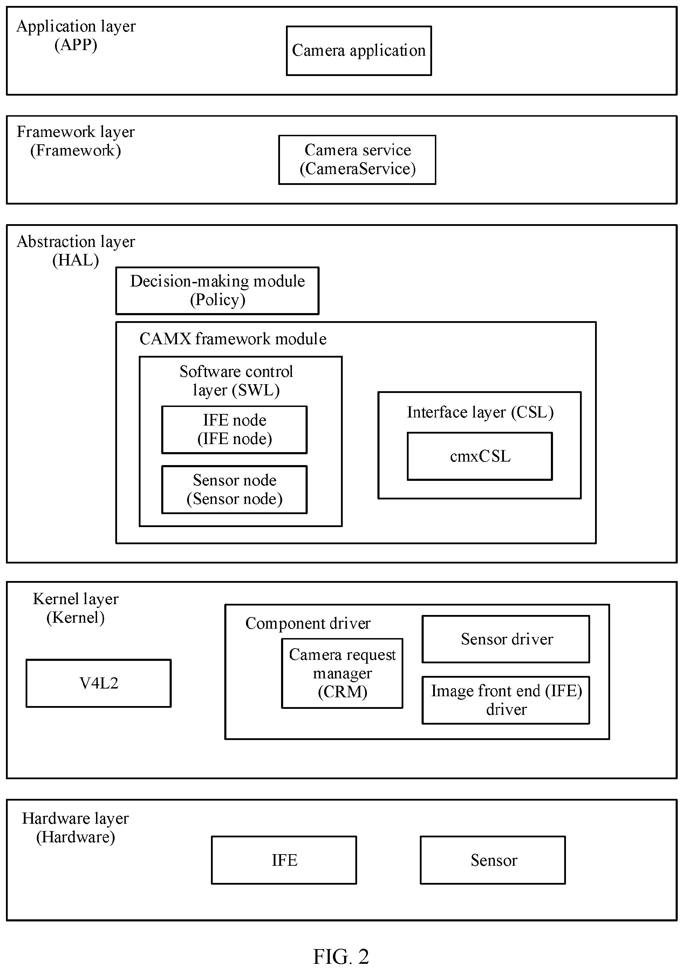

FIG. 2 is a composition diagram of an electronic device according to an embodiment of this application. Based on the composition shown in FIG. 2, by using a software module such as a camera application, the electronic device may control an image sensor to perform continuous image output.

As shown in FIG. 2, in this example, an operating system may be configured in the electronic device. The operating system is divided from a perspective of software. The operating system may have a layered architecture. For example, the electronic device may include an application (Application, APP) layer, a framework (Framework) layer, an abstract layer (HAL) layer, and a kernel (Kernel) layer. These are respectively described below.

The APP layer may also be referred to as an application layer. The application layer may include a series of application packages. For example, the application packages may include a camera application. In some other implementations, the APP layer may further include applications such as Gallery, Calendar, Map, WLAN, Music, Messages, Phone, Navigation, Bluetooth, and Video.

The framework layer may also be referred to as an application framework layer. The framework layer may provide an application programming interface (application programming interface, API) and a programming framework for an application at the application layer. The framework layer includes some predefined functions.

For example, the application framework layer may include a window manager, a content provider, a view system, a resource manager, a notification manager, an activity manager, and an input manager.

In the example of FIG. 2, the framework layer may include a camera service (CameraService). In some implementations, after the electronic device starts the camera application, the camera service may be started at the framework layer according to a start indication delivered by the camera application.

The HAL layer may also be referred to as a hardware abstraction layer. The hardware abstraction layer runs in user space (user space), encapsulates a kernel layer drive, and provides a call interface to an upper layer.

In this example, a decision-making (Policy) module and a CAMX framework module may be configured at the HAL.

In some embodiments, the decision-making module may be configured to determine an image output mode.

The image output mode may include Binning, HDR, Remosaic, Idcg, and the like. In different implementations, specific implementations included in the image output mode may be different. The specific implementations of the image output mode are not limited in this embodiment of this application.

For example, in the Binning image output mode, after collecting an original pixel array, the sensor adds induced charges corresponding to adjacent pixels in the original pixel array together as an actually output pixel. In the Binning image output mode, several adjacent pixels are combined together into one pixel for use. In this way, compared with the original pixel array, original image data output by the sensor keeps a field of view (FOV) unchanged, an output resolution reduced, a photosensitive area enhanced, and sensitivity of light sensing in the dark improved. Generally, the Binning image output mode is also a default output mode.

In the Idcg image output mode, a dynamic range of the sensor can be improved, and the dynamic range is a capability of reflecting both highlighted and shadow content in an image by the sensor. A larger dynamic range of the sensor indicates a stronger capability of reflecting highlighted and shadow content by the sensor. In the Idcg image output mode, the sensor synchronously obtains, by using a same exposure time, a high conversion gain (high conversion gain, HCG) image and a low conversion gain (low conversion gain, LCG) image that correspond to a same frame of original image data. Then, the sensor fuses the high conversion gain image and the low conversion gain image into one frame of image as actually output original image data. Similar to the Idcg image output mode, in the HDR image output mode, the sensor may output original image data with display effect of being brighter in a bright part.

A dynamic range is larger in the Idcg image output mode than the Binning image output mode. Certainly, corresponding power consumption is also higher in the Idcg image output mode than the Binning image output mode, and is about 1.5 times of power consumption in the Binning image output mode.

In the Remosaic image output mode, the sensor uses an original pixel array collected by a 4-cell sensor as output original image data. In other words, in the Remosaic image output mode, the original image data received by the camera driver does not undergo pixel binning. In other words, when the Remosaic image output mode is enabled, the original image data obtained by the camera driver cannot be directly identified and processed. The original image data needs to be converted into an image in a standard bayer format. A conversion process is referred to as remosaic. For example, a (sensor front end, SFE) may convert the original image data collected by the sensor into remosaic image data. In comparison with the original image data obtained in the Binning image output mode, the remosaic image data has more pixels and high definition, and is more applicable to a shooting scene in which a user indicates to enlarge a captured image (that is, increase a zoom ratio).

Different image output modes may be applicable to different shooting scenes/shooting modes.

For example, when the shooting mode is a photo mode, the electronic device may control the sensor to perform image output based on Binning, or control the sensor to perform image output based on Remosaic, or control the sensor to perform image output based on Idcg.

For another example, when the shooting mode is a video mode, the electronic device may control the sensor to perform image output based on Binning, or control the sensor to perform image output based on Idcg.

Parameters such as a resolution, a dynamic range, and/or definition of the RAW image output by the sensor are different in different image output modes. Therefore, through controlling the image output mode of the sensor, the electronic device can obtain a RAW diagram that matches a current scenario.

In some other embodiments, the decision-making module may further determine a camera that needs to be used.

It may be understood that a plurality of cameras may be configured in the electronic device. Then, the decision-making module may determine, according to an instruction delivered by an upper layer (for example, the framework layer), the camera that needs to be used. For example, the decision-making module may determine CameraID of the camera that needs to be used.

In this example, the CAMX framework module may provide a plurality of functional interfaces and/or functional components related to a shooting function.

In some embodiments, the CAMX framework module may include a sensor node (Sensor node) and an image front end (Image Front End, IFE) node (IFE node).

The sensor node may generate a control instruction for the sensor based on an image output mode that currently needs to be used. For example, the control instruction of the sensor may include CameraID, a register address corresponding to the sensor, and a value that needs to be written into a register. The corresponding sensor may be a sensor of a camera that needs to be used (that is, a camera indicated by CameraID). Through generating and delivering the register address and the value, transmission of the control instruction to the sensor is implemented. Further, after the register takes effect, the sensor may perform image output based on a parameter (for example, an image output mode) indicated by the control instruction.

The IFE node may generate a control instruction for the IFE based on the image output mode that currently needs to be used. A specific implementation is similar to a working mechanism of the sensor node. Therefore, after a RAW image is obtained, the IFE may process the RAW image based on a processing mechanism corresponding to the current image output mode.

In the example of FIG. 2, the IFE node and the sensor node may be included in a software layer (Soft Ware Layer, SWL) of the CAMX framework module.

The CAMX framework module may also be configured with a software interface for the outside. For example, the software interface may be configured at a camera service layer (CameraServiceLayer, CSL).

In this example, a cmxCSL module may be configured at the CSL. The cmxCSL module may correspond to the foregoing software interface, and provides a downlink (for example, to a kernel layer) communication capability.

In this example, the kernel layer may be a layer configured between hardware and software.

The kernel layer may include a Linux basic driver. For example, the Linux basic driver may include Video for linux 2 (V4L2 for short). The V4L2 is a kernel driver of a video device in Linux. The V4L2 may receive information from an upper layer (for example, a framework layer). The V4L2 may further transmit the received information to a component driver configured at the kernel layer.

A component driver of each hardware component may be configured at the kernel layer. For example, a sensor driver corresponding to each camera may be configured at the kernel layer. An image front end (IFE) driver may be further configured at the kernel layer. When a plurality of cameras are configured in the electronic device, a corresponding sensor driver and an IFE driver may be configured for each camera at the kernel layer. In some other cases, sensor drivers and/or IFE drivers of different cameras may also be shared.

In some embodiments, a camera request manger (CameraRequestManger, CRM) may be further configured at the kernel layer. The CRM may be configured to manage control information of components such as a sensor and an IFE based on information from an upper layer. For example, the CMR may send, based on CameraID, a write instruction of the register to the sensor driver, the IFE driver, and the like of the camera that need to be used. Further, a camera that needs to be used may perform operations such as image output and IFE image processing based on writing into the register taking effect. For another example, for the camera that needs to be used, the CMR may transmit the corresponding write instruction of the register to the sensor driver, the IFE driver, and the like according to a time sequence of a register in each component of the camera taking effect in different image output modes. In this way, each component can implement image output and frame synchronization of image processing.

In the example of FIG. 2, a hardware component (such as a hardware layer) in the electronic device is further provided. The hardware layer may include components such as an IFE and a sensor. When a plurality of cameras are configured for the electronic device, each camera may be configured with a corresponding IFE and a corresponding sensor. In some implementations, different cameras may also share a same IFE and/or a same sensor.

In this way, the sensor can be controlled to perform image output by using each software layer in the operating system in cooperation with the hardware layer. Therefore, display is performed on a display.

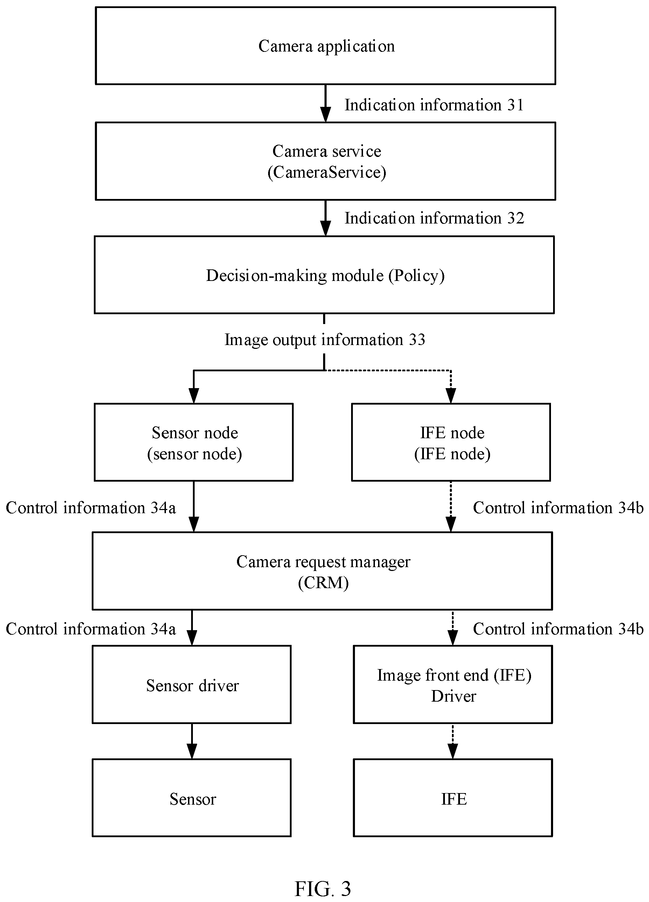

With reference to FIG. 3, module interaction in an image output process of an electronic device is described by using an example based on the software composition shown in FIG. 2.

As shown in FIG. 3, a camera application of the electronic device may send indication information 31 to a camera service. For example, with reference to FIG. 1A and FIG. 1B, the electronic device starts the camera application when receiving an operation OP1 of a user. In this way, the camera application may generate and send the indication information 31 when being started. In some implementations, the camera application may further indicate, by using other control information, a sensor and/or an IFE of a default camera to be powered on and work.

In some embodiments, the indication information 31 may include a start indication. Therefore, the electronic device may start the camera service at a framework layer.

In some other embodiments, the indication information 31 may include parameter information related to image output, for example, a currently used shooting mode and a currently effective focal length parameter.

The shooting mode may include a photo mode, a video mode, and the like. The currently effective focal length parameter corresponds to the effective focal length displayed in the focal length option bar in the interface 02 shown in FIG. 1B. For example, in the example shown in FIG. 1B, the currently effective focal length parameter may indicate that a focal length is 1x. After a user inputs an operation of adjusting a focal length (such as tapping 2x in the focal length option bar), the currently effective focal length parameter changes accordingly (such as changes to 2x).

In some other embodiments, the indication information 31 may include an identifier of a camera that needs to be used. For example, the indication information 31 may include CameraID of the camera that needs to be used.

The camera service may receive the indication information 31, and generate and send the indication information 32 to a decision-making module at an HAL layer.

For example, the indication information 32 may include parameter information that is related to image output and that is delivered by the camera application. For example, the indication information 32 may include the currently used shooting mode and the currently effective focal length parameter.

In some embodiments, the indication information 32 may further include CameraID of the camera that needs to be used.

When the indication information 31 carries CameraID, the camera service may carry same CameraID in the generated indication information 32. In some other implementations, CameraID carried in the indication information 32 may also be determined by the camera service itself according to a preset policy.

The decision-making module determines, based on the indication information 32, an image output mode that needs to be used. With reference to the foregoing description, the image output mode may include Binning, HDR, Remosaic, Idcg, and the like.

For example, in some embodiments, the decision-making module may determine, based on information such as the shooting mode and the focal length parameter that are currently used, the image output mode that needs to be used.

In some other embodiments, the decision-making module may determine the image output mode based on a currently used shooting mode, a currently used focal length parameter, and currently used ambient brightness. The ambient brightness may be obtained by the decision-making module based on an output RAW image, or the ambient brightness may be obtained by the decision-making module based on another sensor (such as a color temperature sensor) configured for the electronic device.

In this example, the decision-making module may further obtain CameraID of the camera that needs to be used (such as a target camera).

In some implementations, the decision-making module may further obtain, based on the indication information 32, CameraID of the camera that needs to be used.

For example, the decision-making module may determine, based on CameraID carried in the indication information 32, CameraID of the camera that needs to be used.

For another example, the decision-making module may independently determine, according to a preset policy, CameraID of the camera that needs to be used.

Then, the decision-making module may transmit information about an image output mode and CameraID separately to a sensor node and an IFE node, to facilitate another component to control hardware of the component.

For example, the decision-making module may separately send image output information 33 to the sensor node and the IFE node. The image output information 33 may include the information about the image output mode and CameraID of the camera that needs to be used.

In this way, the sensor node may generate an instruction based on the image output information 33, to control the sensor of the camera that needs to be used to perform corresponding image output.

The IFE node may generate an instruction based on the image output information 33, to control the IFE of the camera that needs to be used to perform RAW image processing.

A related processing mechanism of the sensor node is used as an example.

The sensor node may generate control information 34a based on the image output information 33. The control information 34a may be control information of a register indicated by CameraID of the camera that needs to be used.

For example, in some embodiments, the control information 34a may include at least one of the following: exposure information, image output frame length information, and image output mode information.

In some other embodiments, the control information 34a may alternatively include only exposure information.

The exposure information may include an exposure duration and a gain. An exposure amount of a frame of image may be identified by using the exposure duration and the gain. A larger exposure amount indicates a longer time required for image output of the frame of image. A smaller exposure amount indicates a shorter time required for image output of the frame of image.

In some implementations of this application, the VTS may be used to identify an image output frame length. The VTS has a linear relationship with the image output frame length. The VTS may indicate a quantity of lines on which exposure needs to be performed in an image output process of a frame of image. In some implementations, a value of the VTS may correspond to different image output frame lengths. A larger VTS indicates a longer time required for image output of the frame of image. A smaller VTS indicates a shorter time required for image output of the frame of image. An image output frame rate being 30 fps is used as an example. A frame length indicated by a default VTS (Default VTS) is about 33 ms. In some implementations, the VTS may also be replaced with a frame length line (FrameLengthLine).

The image output mode may correspond to any image output mode in the foregoing example. In the following example, a currently used image output mode being modeA is used as an example.

In a specific implementation, each piece of information in the control information 34a may be represented by using a register address and a value corresponding to the register address.

For example, the control information 34a includes the foregoing exposure information, the image output frame length information, and the image output mode information.

In a possible implementation, the control information 34a may include an address AD1 and a corresponding value V1, an address AD2 and a corresponding value V2, and an address AD3 and a corresponding value V3.

The address AD1 is a register address for storing an image output mode of a target sensor, and the value V1 indicates modeA of the image output mode. The target sensor is a sensor of a camera indicated by CameraID.

The address AD2 is a register address for storing an image output frame length in the target sensor, and the value V2 indicates that the VTS for image output is V2.

The address AD3 is a register address for storing exposure information of the target sensor, and the value V3 indicates that the exposure information for image output is V3.

In this example, the sensor node may send the generated control information 34a to a camera request manager.

For example, the sensor node may deliver the control information 34a in a form of delivering request information (for example, a request). For example, the sensor node may add the control information 34a to the request, and send the request to the CRM.

With reference to the description in FIG. 2, in some implementations, the sensor node may invoke cmxCSL in the CSL to send the request information that carries the control information 34a to the kernel layer.

V4L2 is configured in the Linux basic driver at the kernel layer. The request information that includes the control information 34a may be transmitted to the CRM.

The CRM may send a corresponding parameter to a sensor driver of the target sensor according to a time sequence of each parameter carried in the control information 34a taking effect. In some implementations, the CRM transmits a part or all of parameters in the control information 34a to the sensor driver. Alternatively, this may be implemented by using the request information.

For example, the control information 34a includes information about an image output mode. The image output mode information may include the address AD1 and the corresponding value V1. A parameter of the image output mode may be configured to take effect after two frames.

In this way, for a parameter of an image output mode of an N^{th} frame of image, the CRM may send the parameter of the image output mode to the sensor driver before an (N-1)^{th} frame of image starts to be output (for example, in an image output process of an (N-2)^{th} frame of image). The sensor driver may directly write the parameter into the corresponding register after receiving the parameter of the image output mode. In other words, the value V1 may be written at the address AD1 of the target sensor in the image output process of the (N-2)^{th} frame of image. It is indicated that image output is performed after two frames based on modeA corresponding to the value V1.

After the (N-2)^{th} frame of image is output, the sensor may continue image output of the (N-1)^{th} frame. The value V1 written at the address AD1 takes effect when the two fames of images: the (N-2)^{th} frame and the (N-1)^{th} frame are output and the N^{th} frame of image is to be output. The sensor performs image output based on modeA corresponding to the value V1.

For example, the control information 34a includes a related parameter of the exposure information. The related parameter of the exposure information may include an address AD3 and a corresponding value V3. The exposure information may be configured to take effect after two frames.

In this way, for exposure information of an N^{th} frame of image, the CRM may send the exposure information to the sensor driver before an (N-1)^{th} frame of image starts to be output (for example, in an image output process of an (N-2)^{th} frame of image). After receiving the exposure information, the sensor driver may directly write the parameter into the corresponding register. In other words, the value V3 may be written at the address AD3 of the target sensor in the image output process of the (N-2)^{th} frame of image. It is indicated that exposure is performed after two frames based on exposure information corresponding to the value V3.

Similar to the foregoing examples, after the (N-2)^{th} frame of image is output, the sensor may continue image output of the (N-1)^{th} frame of image. The value V3 written at the address AD3 takes effect when the two fames of images are output and the N^{th} frame of image is to be output. The sensor performs exposure based on exposure information corresponding to the value V3.

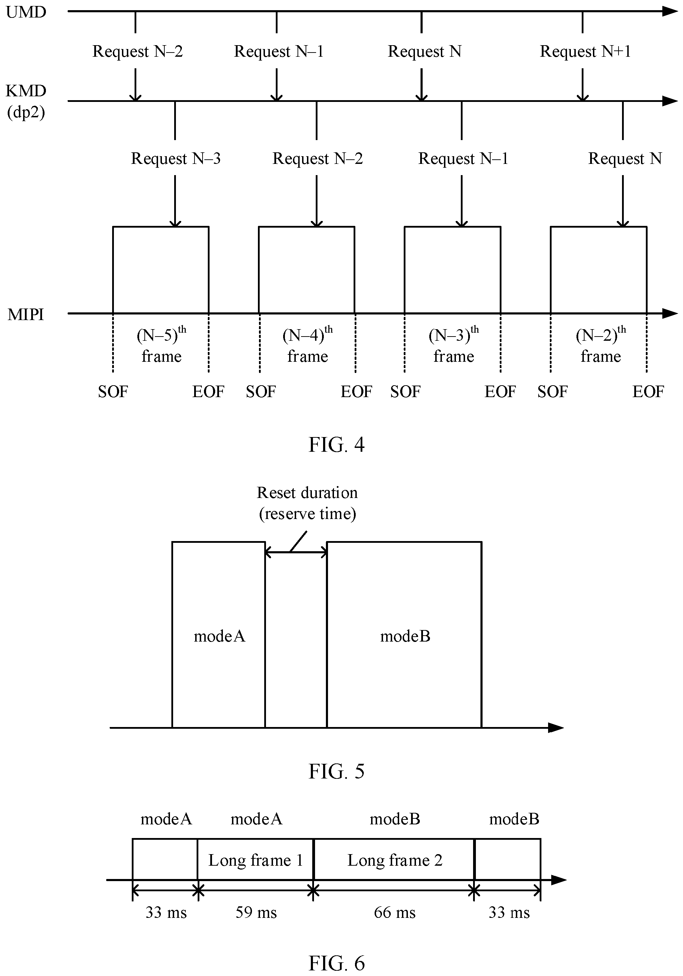

In an example, FIG. 4 shows a comparison example of a time sequence of transmitting request information in an electronic device when two frames take effect.

In FIG. 4, a UMD may indicate a software module at an HAL layer. For example, the UMD may correspond to a sensor node. A KMD may indicate a software module at a kernel layer. For example, the KMD may correspond to a CRM. A MIPI corresponds to an image output time sequence of a sensor. In addition, dp2 indicates that a parameter in the request information takes effect after two frames.

It may be understood that, in the image output process of the sensor, data of a complete frame of image may be obtained through division by using a start of frame (SOF) and an end of frame (EOF). For example, when the sensor outputs a frame of image, a corresponding data flow may start with a SOF and end with an EOF. A data flow of a RAW image may be included between the SOF and the EOF.

Delivery of a request N-2 of an (N-2)^{th} frame is used as an example.

As shown in FIG. 4, the KMD may deliver the request N-2 corresponding to the (N-2)^{th} frame in an image output process of an (N-4)^{th} frame of image (that is, after a SOF of the (N-4)^{th} frame of image and before an EOF). Therefore, before the (N-4)^{th} frame of image is output, the sensor driver writes a parameter in a request N-2 into a corresponding register. In this way, the parameter in the request N-2 takes effect after the (N-4)^{th} frame of image and an (N-3)^{th} frame of image are output. In an image output process of the (N-2)^{th} frame of image, an image sensor may perform image output based on the parameter in the request N-2.

It may be understood that, before the KMD delivers the request N-2, the request N-2 may be received from the UMD. For example, as shown in FIG. 4, the KMD may receive the request N-2 from the UMD in an image output process of the (N-5)^{th} frame. In some other embodiments, a transmission occasion of the request N-2 between the UMD and the KMD may be any other time before image output of the (N-4)^{th} frame of image starts. A specific implementation is not limited.

In the foregoing example of FIG. 4, that the parameter in the request information takes effect after two frames is used as an example for description. In some other implementations, the request information may further include a parameter that takes effect after one frame. For example, if the parameter that takes effect after one frame is written into an N^{th} frame, the parameter takes effect when an (N+1)^{th} frame of image is output.

That the control information 34a includes a related parameter of an image output frame length is used as an example. The related parameter of the image output frame length may include an address AD2 and a corresponding value V2. The related parameter of the image output frame length can be configured to take effect after one frame.

In this way, for a related parameter of an image output frame length of an N^{th} frame of image, the CRM may send the related parameter of the image output frame length to the sensor driver before an N^{th} frame of image starts to be output (for example, in an image output process of an (N-1)^{th} frame of image). The sensor driver may directly write the parameter into the corresponding register after receiving the related parameter of the image output frame length. In other words, the value V2 may be written at the address AD2 of the target sensor in the image output process of the (N-1)^{th} frame of image. It is indicated that image output is performed after one frame based on a frame length corresponding to the value V2.

Therefore, after the (N-1)^{th} frame of image is output, the value V2 written at the address AD2 takes effect when the fame of image is output and the N^{th} frame of image is to be output. The sensor performs image output based on the frame length corresponding to the value V2.

The foregoing shows an example of a signaling transmission process related to the sensor node. Similarly, the IFE node may also generate, based on the image output information 33, control information 34b corresponding to the IFE. The IFE node may send the control information 34b to the CRM. Correspondingly, the CRM may write each parameter into a register of the IFE by using the IFE driver and according to a time sequence corresponding to each parameter. In this way, in a process of processing the RAW image by the IFE, frame synchronization is implemented for a used parameter.

In this way, based on descriptions in FIG. 3 and FIG. 4, the electronic device may control, by using an internal software instruction, the sensor to perform image output based on a corresponding image output mode, a corresponding image output frame length, and corresponding exposure information.

It should be noted that, in the foregoing description, description is provided by using an example in which a request of each frame of image carries information about a corresponding image output mode of the frame of image. In some other embodiments, if an image output mode of a current frame of image is the same as that of a previous frame of image, that is, the image output mode does not change, a request of the frame of image may not carry image output mode information. Correspondingly, when the KMD and the sensor do not receive a new image output mode, the existing image output mode may be still used for image output.

For example, the decision-making module determines that both image output modes of the (N-2)^{th} frame of image and the (N-1)^{th} frame of image are modeA. Therefore, the request N-1 corresponding to the (N-1)^{th} frame of image may carry only parameters such as exposure information, and does not need to carry information about modeA. Based on the request N-1, the sensor may continue image output of the (N-1)^{th} frame of image based on modeA.

In some current solutions, the electronic device may further provide a seamless switching solution of an image output mode. In this way, when an environment scenario changes, the electronic device can control the image sensor to switch to an image output mode matching the new scenario for image output, to obtain better image output and display effect. In this application, the seamless switching solution of the image output mode may be referred to as a seamless switching solution or seamless switching.

For example, when ambient brightness, a dynamic range, an effective focal length, and the like change, the electronic device may determine, by using the decision-making module, an image output mode that needs to be switched. For example, modeA is switched to modeB. The decision-making module may add, to newly delivered image output information, information about an image output mode corresponding to modeB, so that the sensor node and the IFE node control hardware to perform subsequent image output based on modeB.

With reference to FIG. 5, before and after different mode switching, a reset duration may be included between image output of two frames of images. The sensor may perform parameter adjustment when modeA is switched to modeB within a time period of the reset duration.

In a current solution implementation, a relatively long image output lag occurs in a process of switching from modeA to modeB. This corresponds to a preview flow lag on the display.

As shown in FIG. 6, an image output frame rate of 30 fps is used as an example through actual measurement. Before seamless switching is triggered, the sensor may complete image output of one frame of image in 33 ms based on modeA. When seamless switching is triggered, two long frames with a duration of about 59 ms and a duration of about 66 ms appear.

The long frame 1 of 59 ms may correspond to a first frame after seamless switching is triggered. The long frame 1 of 66 ms may correspond to a second frame after seamless switching is triggered. Display may be back to normal at a third frame. Based on modeB, image output and display of one frame of image are completed in 33 ms.

In this way, after seamless switching is triggered, a lag of at least two frames of images occurs on the display.

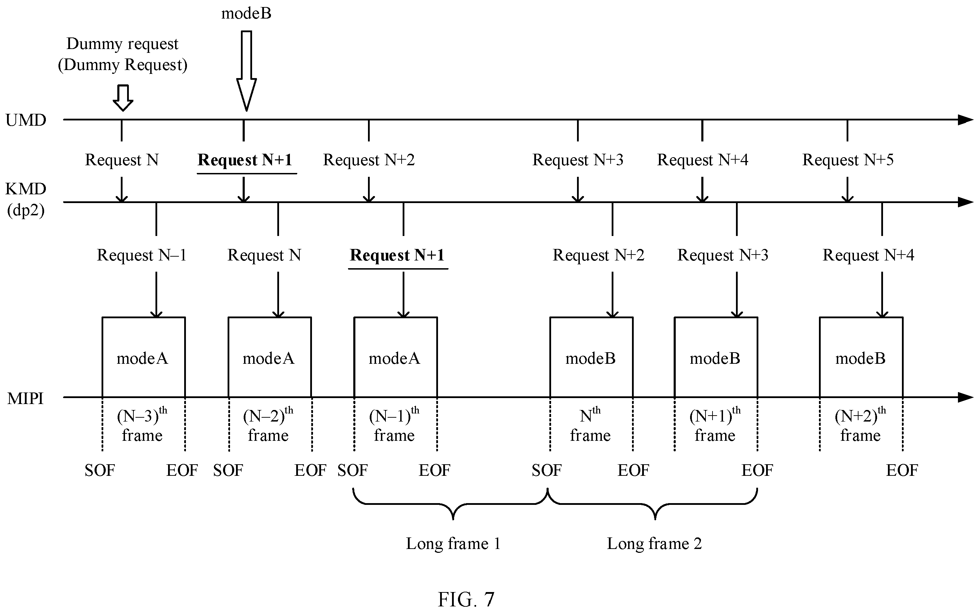

In this application, the following describes a request information delivery mechanism in an image output mode switching process with reference to time sequence comparison provided in FIG. 7. Therefore, a reason of occurrence of the lag shown in FIG. 6 can be determined. The existing solution shown in FIG. 7 may also be referred to as a solution 1.

In the example shown in FIG. 7, that the decision-making module determines to switch from modeA to modeB at the N^{th} frame of image for image output is used as an example.

As shown in FIG. 7, the UMD may deliver a request N before the (N-2)^{th} frame of image starts to be output. In this way, in the image output process of the (N-2)^{th} frame of image, the KMD may write the request N into a register of the sensor.

With reference to the foregoing description, in this example, the request N may include a related parameter that takes effect after two frames, for example, the exposure information Expo1 of the N^{th} frame of image.

In this way, after the (N-2)^{th} frame of image is output, the sensor may continue image output of the (N-1)^{th} frame of image. After the request N is written into the sensor, the sensor outputs two frames of images, and the parameter of the request N takes effect.

It should be noted that, in the seamless switching solution, a new configuration parameter may be configured to take effect after one frame.

When determining that the N^{th} frame of image needs to be switched to modeB for image output, the UMD may deliver the request N+1 to the KMD before a SOF of the (N-1)^{th} frame arrives (that is, before the (N-1)^{th} frame of image starts to be output). The request N+1 may carry a parameter that needs to be used for the N^{th} frame of image after switching to modeB.

For example, the request N+1 may include at least one of the following:
information indicating to perform image output based on modeB, exposure information (for example, exposure information Expo2) of the N^{th} frame of image, and information indicating an image output frame length of the N^{th} frame of image (for example, VTS1).

In the example shown in FIG. 7, the UMD may deliver the request N+1 in an image output process of the (N-2)^{th} frame of image.

The KMD may write the request N+1 into the register of the sensor in an image output process of a next frame (for example, the (N-1)^{th} frame) after receiving the request N+1. For example, a value corresponding to modeB is written at an address for storing an image output mode in the register. Therefore, the sensor is indicated to switch to modeB in next frame switching for image output.

Therefore, after the request N+1 is written into the register, and the (N-1)^{th} frame is output, information such as an image output mode (such as modeB) indicated by the request N+1 takes effect in an image output process of the N^{th} frame. Correspondingly, the sensor may output the N^{th} frame of image based on the parameter indicated by the request N+1.

In other words, when the N^{th} frame of image is output, a parameter that actually takes effect is the parameter configured in the request N+1. For example, when the N^{th} frame of image is output, the sensor may perform image output based on information such as the image output mode: modeB, the exposure information Expo2, and the image output frame length: VTS1.

The N^{th} frame of image may be a 1^{st} frame of image output based on modeB. The parameter in the request N+1 corresponding to the N^{th} frame of image may be one-frame effective.

Thereafter, for image output of a subsequent frame of image such as the (N+1)^{th} frame, a default delay frame effective mechanism may be restored. For example, parameters such as an image output mode and exposure information may be delayed for two frames to take effect. For another example, parameters such as an image output frame length (such as a VTS) may be delayed for one frame to take effect.

For example, an image output frame length included in the request N+2 is VTS2.

When the (N+1)^{th} frame of image is output, the sensor may use modeB indicated by the request N+1, the exposure information Exop1, and VTS2 indicated by the request N+2 for image output.

Therefore, seamless switching can be completed by using the (N-1)^{th} frame and the N^{th} frame. The (N-1)^{th} frame may also be referred to as a first frame after seamless switching is triggered. A second frame after seamless switching is triggered may be displayed after the first frame.

The first frame after seamless switching is triggered may correspond to the long frame 1 shown in FIG. 6.

With reference to the description in FIG. 5, the sensor may immediately start to perform mode switching processing because the image output mode: modeB indicated by the request N+1 takes effect after the (N-1)^{th} frame of image is output. For example, after the (N-1)^{th} frame of image is output, the sensor may perform a related operation of switching to modeB for image output in a time of a reset duration. Then, the sensor may immediately start exposure of the N^{th} frame of image based on the exposure information Expo2 indicated by the request N+1.

In this way, before an EOF of the N^{th} frame of image arrives, a duration of the first frame after seamless switching is triggered may include: an image output duration (such as 33 ms) of the (N-1)^{th} frame of image, a reset duration (such as 1 ms to 2 ms), and an exposure duration (such as an exposure duration corresponding to the exposure information Expo2) of the N^{th} frame of image. Therefore, a display time of the first frame is also significantly greater than normal 33ms. Further, the first long frame (such as a long frame 1) shown in FIG. 6 is formed.

In the foregoing example, the second frame after seamless switching is triggered may correspond to the long frame 2 shown in FIG. 6.

In a current technical implementation, after seamless switching is triggered, image output effect of the N^{th} frame of image that is output based on new modeB may be abnormal due to unstable matching of a plurality of modules such as a sensor, an algorithm, and an AE. In consideration of this, therefore, the electronic device (for example, the decision-making module of the electronic device) may mark the N^{th} frame as non-display. Correspondingly, the request N may be a dummy request (Dummy Request), and corresponds to the N^{th} frame of image being not displayed.

In this case, after the sensor displays the N^{th} frame of image based on the request N+1, the electronic device may not display the N^{th} frame of image.

Correspondingly, to implement smooth switching of a preview flow when the N^{th} frame of image is not displayed, the electronic device may adjust a timestamp of the (N+1)^{th} frame of image to a timestamp of the N^{th} frame of image. For example, the electronic device may adjust a timestamp of the SOF of the (N+1)^{th} frame of image to a timestamp of the SOF of the N^{th} frame of image.

Therefore, the electronic device may directly display the (N+1)^{th} frame of image when the N^{th} frame of image needs to be displayed.

In this way, a duration of actually displaying the (N+1)^{th} frame of image on the display corresponds to a duration between the SOF of the N^{th} frame of image and the EOF of the (N+1)^{th} frame of image. The long frame 2 shown in FIG. 6 is formed. It may be learned that a duration of the long frame 2 is close to display durations of two consecutive frames of images.

The solution in this embodiment of this application can effectively overcome the foregoing display lag problem on the display after seamless switching is triggered.

For example, in some embodiments of this application, a duration of the long frame 1 is shortened by adjusting and optimizing duration information of the N^{th} frame of image. In some other embodiments of this application, the duration of the long frame 2 is shortened by adjusting and optimizing an image output frame length of the N^{th} frame of image and/or the (N+1)^{th} frame of image. In some other embodiments of this application, a display lag after switching to modeB may be further optimized by optimizing the exposure information and the image output frame length of the N^{th} frame of image and the image output frame length of the (N+1)^{th} frame of image.

These are respectively described below.

In some embodiments of this application, for example, the exposure duration of the N^{th} frame of image is optimized.

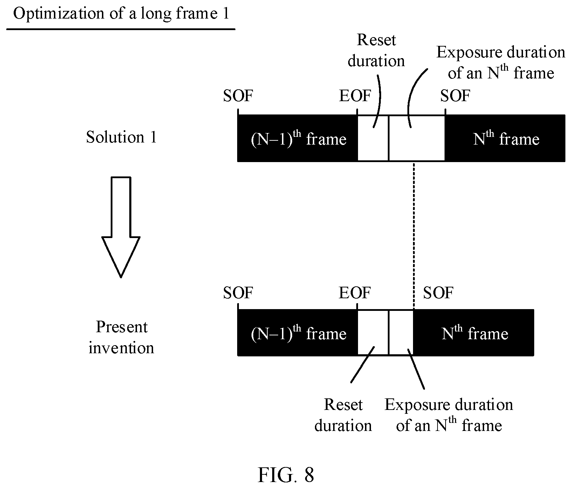

Refer to FIG. 8. In the existing solution shown in the solution 1, the long frame 1 corresponds to the SOF of the (N-1)^{th} frame of image to the SOF of the N^{th} frame of image. The long frame 1 specifically includes an image output time of the (N-1)^{th} frame of image (that is, a duration between the SOF of the (N-1)^{th} frame of image and the EOF of the (N-1)^{th} frame of image), the reset duration, and the exposure duration of the N^{th} frame.

Through the solution implementation provided in this embodiment of this application, the exposure duration of the N^{th} frame is optimized. An optimized exposure duration of the N^{th} frame of image is less than the original exposure duration of the N^{th} frame of image in the solution 1. Therefore, effect of optimizing the long frame 1 is achieved by shortening a duration between the SOF of the (N-1)^{th} frame of image and the SOF of the N^{th} frame of image.

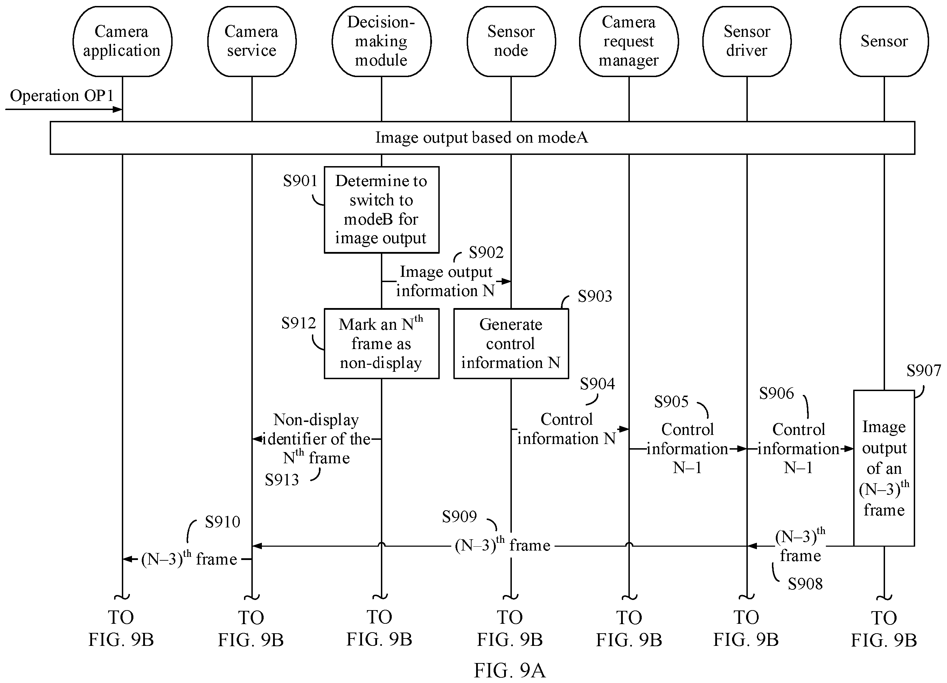

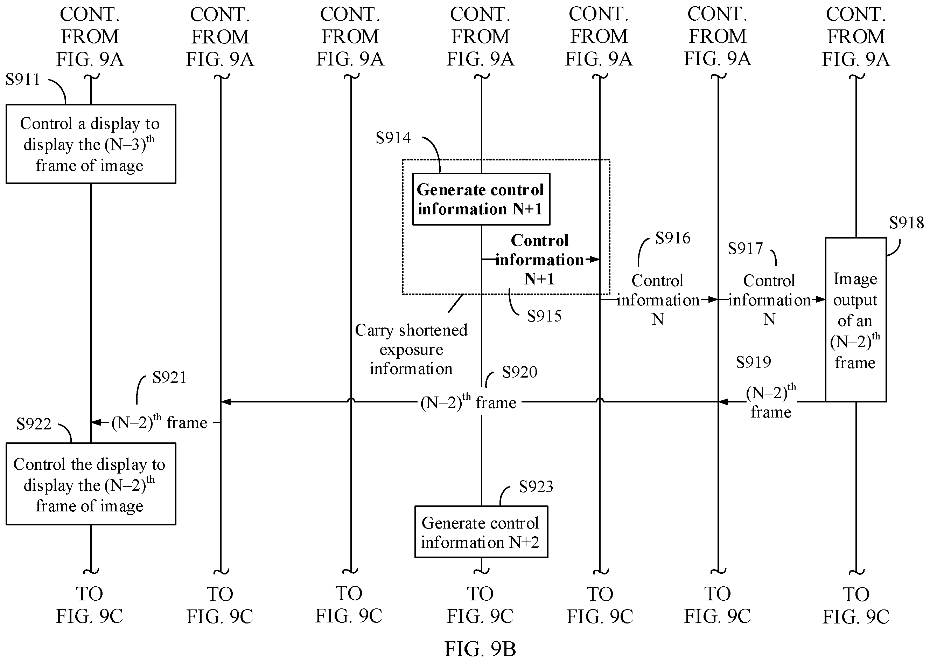

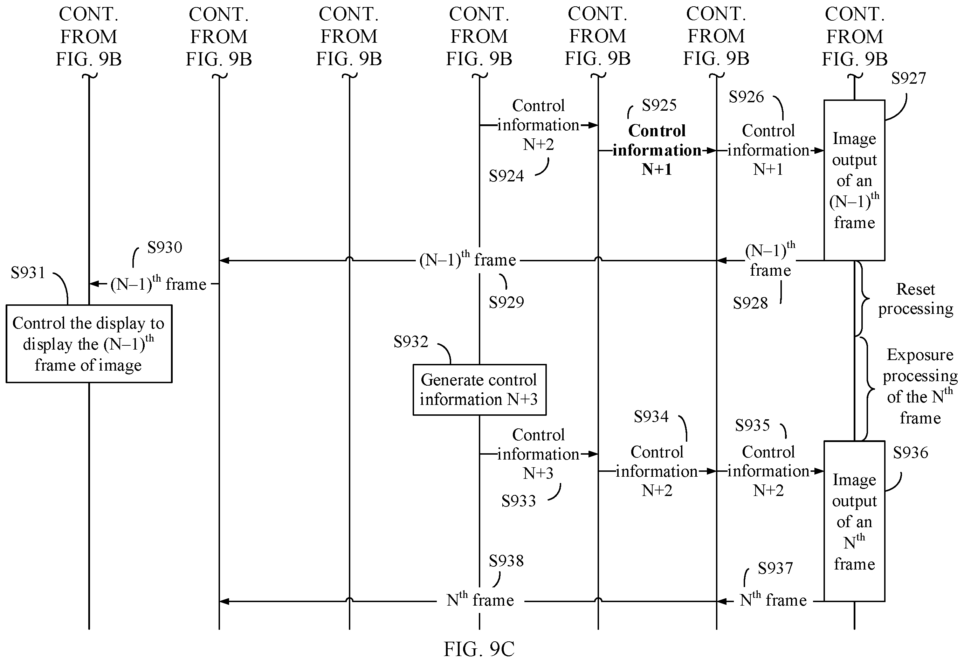

The solution implementation shown in FIG. 8 is described in detail below with reference to an interaction example in FIG. 9A, FIG. 9B, and FIG. 9C. For example, the N^{th} frame of image is a 1^{st} frame of image that is output based on modeB.

As shown in FIG. 9A, FIG. 9B, and FIG. 9C, the solution may include the following steps:
S901: A decision-making module determines to switch to modeB for image output.

In this example, before the decision-making module determines to switch to modeB for image output, a sensor may perform image output based on modeA under control of an electronic device.

For example, as shown in FIG. 9A, FIG. 9B, and FIG. 9C, in some embodiments, as shown in FIG. 9A, FIG. 9B, and FIG. 9C, before S901 is performed, a camera application may start running after the electronic device receives an operation OP1 input by a user. Then, all components in the electronic device may cooperate with each other, so that the sensor performs image output based on modeA.

For a specific implementation of performing image output based on modeA, refer to the example in FIG. 3. Details are not described herein again.

In this example, the decision-making module may determine, based on a change in current ambient brightness, and/or a dynamic range, and/or an effective focal length, a to-be-switched-to image output mode. For example, the decision-making module may determine that it is currently necessary to switch to modeB for image output.

S902: The decision-making module sends image output information N to a sensor node.

For example, the image output information N may include information indicating to perform image output based on modeB.

In some embodiments, the image output information N may further include an identifier corresponding to an N^{th} frame. In this way, each module in the electronic device can synchronously switch to modeB for image output from the N^{th} frame.

S903: The sensor node generates control information N.

For example, the sensor node may generate the control information N based on the received image output information N.

With reference to the description of the control information 34a in FIG. 3, in this example, the control information N generated by the sensor node may include a related parameter that indicates the sensor to perform image output at the N^{th} frame.

In some embodiments, the control information N may include exposure information Expo1 of the N^{th} frame of image. An exposure duration corresponding to the exposure information Expo1 may be ExpoT1.

In some other embodiments, the control information N may include another parameter required during image output.

It may be understood that, because the N^{th} frame of image is configured as non-display, and all configuration information of a 1^{st} frame after seamless switching is triggered takes effect in one frame, a parameter configured in a request N+1 is actually used when the N^{th} frame of image is output. The control information N is covered by the parameter configured in the request N+1. Therefore, an actual configuration status in the control information N may also be flexibly adjusted as required. This is not limited in this embodiment of this application.

In a specific implementation, each parameter in the control information N may be represented in a register address + value form. For details, refer to the foregoing description.

S904: The sensor node sends the control information N to a camera request manager (CRM).

For example, the sensor node may send the control information N to the CRM in an image output process of an (N-3)^{th} frame.

In some other embodiments, the sensor node may also send the control information N to the CRM before an (N-2)^{th} frame starts to be output (that is, before a SOF of the (N-2)^{th} frame arrives).

With reference to the foregoing description, in this application, the CRM may send control information to the sensor by using a sensor driver according to a time sequence of each parameter taking effect.

S905: The camera request manager sends control information N-1 to the sensor driver.

For example, parameters in the control information N-1 all take effect in two frames. In this way, the CRM may send the control information N-1 to the sensor driver in an image output process of the (N-3)^{th} frame (that is, between a SOF and an EOF of the (N-3)^{th} frame).

S906: The sensor driver writes the control information N-1 into the sensor.

For example, the sensor driver may search for a location in a register of the sensor based on a register address indicated by each parameter in the control information N-1, and write a value of the address indicated by the control information N-1 into the register.

In this way, a parameter written into the register can take effect after the (N-3)^{th} frame and the (N-2)^{th} frame are output. Further, the parameter indicated by the control information N-1 takes effect in two frames.

For example, the parameter that takes effect in two frames may include exposure information of a first frame of non-seamless switching. In this way, the control information N-1 may include exposure information during image output of the (N-1)^{th} frame of image.

S907: The (N-3)^{th} frame of image is output.

For example, when the EOF of the (N-3)^{th} frame arrives, it indicates that the (N-3)^{th} frame is output.

S908: The sensor transmits the (N-3)^{th} frame of image to the sensor driver.

For example, the sensor may transmit a RAW image of the (N-3)^{th} frame of image to the sensor driver.

S909: The sensor driver transmits the (N-3)^{th} frame of image to a camera service.

For example, in some embodiments, the sensor driver may transmit the (N-3)^{th} frame of image to a component that performs preliminary processing on an image in the electronic device, to perform preliminary processing. For example, the sensor driver may transmit the RAW image of the (N-3)^{th} frame to a component such as an IFE for processing. The (N-3)^{th} frame of image obtained through preliminary processing may be stored in the electronic device and wait to be displayed.

Correspondingly, the camera service (or SurfaceFlinger configured at a framework layer of the electronic device) may obtain, based on a synchronization signal (Vsync signal), data of the (N-3)^{th} frame of image in a display queue for combination. Therefore, the process, indicated in S909, in which the sensor driver transmits the (N-3)^{th} frame of image to the camera service is completed.

S910: The camera service obtains a to-be-displayed image of the (N-3)^{th} frame of image, and transmits the to-be-displayed image to the camera application.

S911: The camera application controls a display to display the (N-3)^{th} frame of image.

It should be noted that in some other embodiments of this application, S910 and S911 may also be replaced with the following process: the camera service (or SurfaceFlinger) obtains a to-be-displayed image of the (N-3)^{th} frame of image, and places the to-be-displayed image in a display queue. In this way, when a next Vsync signal arrives, the display may obtain, from the display queue, a to-be-displayed image (for example, obtain the (N-3)^{th} frame of image) already in the display queue, and display the to-be-displayed image.

As shown in FIG. 9A, FIG. 9B, and FIG. 9C, after the decision-making module performs S901, S912 and S913 may be further performed.

S912: The decision-making module marks the N^{th} frame as non-display.

S913: The decision-making module sends, to the camera service, an identifier indicating that the N^{th} frame is not displayed.

With reference to the foregoing description about a problem that a first frame after mode switching may have display abnormality, in this example, the decision-making module may determine to use a new image output mode (such as modeB) at the N^{th} frame of image for image output, and configure the N^{th} frame of image as non-display.

In this example, the decision-making module may mark the N^{th} frame of image by using S912 and S913. In some implementations, the decision-making module may mark a request for transmitting the related parameter of the N^{th} frame as DummyRequest.

In this way, before the camera service (or SurfaceFlinger) needs to perform composition processing on the N^{th} frame of image, composition and display may be not performed on the N^{th} frame of image based on the non-display identifier of the N^{th} frame.

Therefore, image output and display of the (N-3)^{th} frame of image can be completed.

Then, the electronic device may further perform subsequent image output and display by using the following steps.

S914: The sensor node generates control information N+1.

For example, the control information N+1 may indicate an image output parameter of the N^{th} frame of image through one-frame effectiveness.

In some embodiments, the control information N+1 may include information indicating to perform image output based on modeB.

In some embodiments, the control information N+1 may include exposure information Expo3 of the N^{th} frame of image.

It should be noted that, in this embodiment of this application, the exposure information Expo3 may be determined by the sensor node.

With reference to the foregoing description, in an existing solution, exposure information carried in the request N+1 may be exposure information Expo2. A corresponding exposure duration may be ExpoT2.

In this example, the exposure information carried in the control information N+1 may be Expo3, and a corresponding exposure duration may be ExpoT3. ExpoT3 may be less than ExpoT2.

In some implementations, ExpoT3 may be greater than or equal to a half of ExpoT2, and less than ExpoT2.

In this way, exposure of the N^{th} frame of image is performed based on ExpoT3, to shorten an exposure duration of the N^{th} frame of image. With reference to the description in FIG. 8, by shortening the exposure duration of the N^{th} frame, effect of shortening a duration between a SOF of the (N-1)^{th} frame and a SOF of the N^{th} frame can be achieved. Further, in the foregoing description, the long frame 1 after seamless switching is triggered is shortened.

In this way, a lag caused due to the presence of the long frame 1 is effectively optimized.

In a possible implementation, before generating the control information N+1, the sensor node may determine that the N^{th} frame of image is a 1^{st} frame of image that is output based on the new image output mode after seamless switching. Therefore, it is determined that the control information N+1 controls the image output parameter (such as exposure information) of the N^{th} frame of image through one-frame effectiveness.

The sensor node may obtain an exposure amount corresponding to the exposure information Expo2, and further determine Expo3 information based on the exposure amount corresponding to Expo2.

For example, in different implementations, the sensor node may obtain, in different manners, the exposure amount corresponding to Expo2.

In some embodiments, the sensor node may determine, based on current ambient brightness and an AE (that is, automatic exposure) policy, the indicated exposure amount corresponding to Expo2. For example, the sensor node may obtain that the exposure duration included in Expo2 is ExpoT2 and an exposure gain included in Expo2 is ExpoG1. Therefore, the sensor node may determine that the indicated exposure amount corresponding to Expo2 is (ExpoT2×ExpoG1).

In some other embodiments, an AE module (not shown in FIG. 2) may be configured in a CMAX framework module of the electronic device, and the AE module may obtain, based on the current ambient brightness and the AE policy, the exposure amount corresponding to Expo2. Correspondingly, the sensor module may obtain, from the AE module, the exposure amount corresponding to Expo2. Similar to the foregoing description, in this example, the AE module may obtain that the exposure duration included in Expo2 is ExpoT2, and the exposure gain included in Expo2 is ExpoG1. Therefore, the AE module may determine that the indicated exposure amount corresponding to Expo2 is (ExpoT2×ExpoG1). Correspondingly, the sensor node may obtain, from the AE module, the indicated exposure amount (ExpoT2×ExpoG1) corresponding to Expo2.

In this example, the sensor node may further determine Expo3 information based on the exposure amount corresponding to Expo2.

In some embodiments, the sensor node may determine the Expo3 information based on a maximum exposure gain (such as Gmax) that can be supported by the target sensor and the exposure amount corresponding to Expo2.

For example, the sensor node may determine that Expo3 includes an exposure duration of ExpoT3 and an exposure gain of Gmax. ExpoT3=(ExpoT2×ExpoG1)/Gmax.

It may be understood that, generally, ExpoG1 is less than Gmax. Therefore, ExpoT3 is less than ExpoT2. In this way, an exposure duration of exposure performed based on ExpoT3 for the N^{th} frame is less than an exposure duration of exposure performed based on ExpoT2 for the N^{th} frame. Therefore, a duration of the long frame 1 is shortened.

In some other embodiments, the sensor node may determine the Expo3 information based on a preset policy and the exposure amount corresponding to Expo2.

For example, the sensor node may determine ExpoT3 based on the preset policy. ExpoT3 is less than ExpoT2. On this basis, the sensor node may further determine that an exposure gain in Expo3 is (ExpoT2×ExpoG1)/ExpoT3.

It may be understood that Expo3 in the control information N+1 can be obtained in the foregoing implementations. The exposure duration ExpoT3 in Expo3 is less than ExpoT2. Therefore, the exposure duration of the N^{th} frame can be shortened. In addition, the exposure gain in the Expo3 may be adjusted correspondingly with ExpoT3, so that the exposure amount remains unchanged before and after the exposure duration is adjusted. Therefore, exposure performance in an image output process of the (N+1)^{th} frame of image is ensured.

In this application, Expo2 before modification may be referred to as default exposure information of the N^{th} frame. ExpoT2 may be a default exposure duration of the N^{th} frame. ExpoG1 may be a default exposure gain of the N^{th} frame.

It should be noted that, to ensure image output stability of adjacent frames, in some implementations, adjacent frames may have same exposure times and same exposure gains. For example, before the exposure time of the N^{th} frame is changed to ExpoT3 according to the solution provided in this embodiment of this application, the exposure time of the N^{th} frame may be ExpoT2. Correspondingly, the exposure time of the (N-1)^{th} frame may also be ExpoT2. In this way, when the sensor node needs to obtain ExpoT2 of the N^{th} frame, the sensor node may also obtain ExpoT2 by obtaining an exposure time of an adjacent frame (for example, the (N-1)^{th} frame). Similarly, by obtaining the exposure gain of the (N-1)^{th} frame, the sensor node may determine the exposure gain ExpoG1 configured by default for the N^{th} frame.

S915: The sensor node sends the control information N+1 to the camera request manager CRM.

For example, the control information N+1 may include ExpoT3 of the shortened exposure information (exposure duration).

S916: The camera request manager sends control information N to the sensor driver.

S917: The sensor driver writes the control information N into the sensor.

For example, execution of S916 and execution of S917 may be completed in an image output process of the (N-2)^{th} frame of image (that is, between a SOF and an EOF of the (N-2)^{th} frame of image).

S918: The (N-2)^{th} frame of image is output.

S919: The sensor transmits the (N-2)^{th} frame of image to the sensor driver.

S920: The sensor driver transmits the (N-2)^{th} frame of image to the camera service.

S921: The camera service obtains a to-be-displayed image of the (N-2)^{th} frame of image, and transmits the to-be-displayed image to the camera application.

S922: The camera application controls the display to display the (N-2)^{th} frame of image.

Therefore, image output and display of the (N-2)^{th} frame of image can be completed. For execution of S916 to S922, refer to the foregoing description of S905 to S911. Details are not described herein again.

Then, the electronic device may continue image output and display of the (N-1)^{th} frame of image.

S923: The sensor node generates control information N+2.

S924: The sensor node sends the control information N+2 to the camera request manager (CRM).

For example, the control information N+2 may include a two-frame effective image output parameter of an (N+2)^{th} frame of image. For example, the control information N+2 may include exposure information corresponding to image output of the (N+2)^{th} frame of image.

S925: The camera request manager sends control information N+1 to the sensor driver.

S926: The sensor driver writes the control information N+1 into the sensor.

For example, the exposure information carried in the control information N+1 may be Expo3, and the corresponding exposure duration may be ExpoT3.

In this example, the CRM receives the exposure information Expo3 in the image output process of the (N-2)^{th} frame. Correspondingly, in the image output process of the (N-1)^{th} frame, the control information N+1 (including Expo3) is written into the sensor driver by using the sensor driver.

Because the control information N+1 is the parameter of the 1^{st} frame after seamless switching is triggered, the parameter carried in the control information N+1 (such as the exposure information Expo3 or the image output mode modeB) is configured as one-frame effective.

S927: The (N-1)^{th} frame of image is output.

S928: The sensor transmits the (N-1)^{th} frame of image to the sensor driver.

S929: The sensor driver transmits the (N-1)^{th} frame of image to the camera service.

S930: The camera service obtains a to-be-displayed image of the (N-1)^{th} frame of image, and transmits the to-be-displayed image to the camera application.

S931: The camera application controls the display to display the (N-1)^{th} frame of image.

Therefore, image output and display of the (N-1)^{th} frame of image can be completed. For execution of S925 to S931, refer to the foregoing description of S905 to S911. Details are not described herein again.

It may be understood that the (N-1)^{th} frame of image may be a final frame of image that is output based on modeA before switching.

Then, the electronic device may continue image output of the N^{th} frame of image. The N^{th} frame of image may be a 1^{st} frame of image that is output after seamless switching is triggered.

S932: The sensor node generates control information N+3.

S933: The sensor node sends the control information N+3 to the camera request manager (CRM).

For example, the control information N+3 may include a two-frame effective image output parameter of an (N+3)^{th} frame of image. For example, the control information N+3 may include exposure information corresponding to image output of the (N+3)^{th} frame of image.

S934: The camera request manager sends control information N+2 to the sensor driver.

S935: The sensor driver writes the control information N+2 into the sensor.

For example, the process of S934 and S935 may be implemented in an image output process of the N^{th} frame. In this way, an image output parameter of the (N+2)^{th} frame of image can be written into the register, and takes effect after two frames.

S936: The N^{th} frame of image is output.

With reference to the foregoing description, the image output process of the N^{th} frame may start from the SOF of the N^{th} frame and end at an EOF of the N^{th} frame. In the image output process of the N^{th} frame, an effective parameter configuration may be that the image output mode in the control information N+1 is modeB, and the like.

Before the SOF of the N^{th} frame arrives, after the EOF of the (N-1)^{th} frame arrives, the sensor may perform image output based on a new image output mode (such as modeB) indicated in the control information N+1, to image output mode switching. For example, through reset processing, each component switches to modeB for image output. For another example, after reset processing is completed, exposure of the N^{th} frame of image is performed based on the exposure information Expo3 indicated in the control information N+1.

With reference to the foregoing description, the exposure duration of the N^{th} frame of image may be ExpoT3, and is less than default Expo2. Therefore, the duration between the SOF of the N^{th} frame and the EOF of the (N-1)^{th} frame in this example may be less than the duration between the SOF of the N^{th} frame and the EOF of the (N-1)^{th} frame in an existing solution. Therefore, effect of shortening the long frame 1 can be achieved.

S937: The sensor transmits the N^{th} frame of image to the sensor driver.

S938: The sensor driver transmits the N^{th} frame of image to the camera service.

It may be understood that, after the N^{th} frame of image is output, the camera service may not perform, based on the non-display identifier that is of the N^{th} frame and that is received in S913, subsequent composition processing and the like on the N^{th} frame of image received in S938. In this way, corresponding image output processing of the N^{th} frame can be completed.

Therefore, through the solution of S901 to S938, the electronic device can adjust a parameter that indicates the exposure duration (for example, adjust to ExpoT3) and that is in the control information of the N^{th} frame of image, to shorten the exposure duration of the N^{th} frame of image. Therefore, effect of shortening the long frame 1 is achieved. Further, a display lag caused by the long frame 1 is optimized, or a display lag caused by the long frame 1 is avoided. In other words, a duration of displaying the (N-1)^{th} frame on the display is controlled, to avoid a display lag caused by the excessively long display time of the (N-1)^{th} frame of image on the display.

In some other embodiments of this application, a solution is further provided, to optimize the long frame 2. A display lag of a 1^{st} frame of image (that is, the (N+1)^{th} frame of image) displayed after switching to modeB is optimized, or the display lag of the frame of image is avoided.

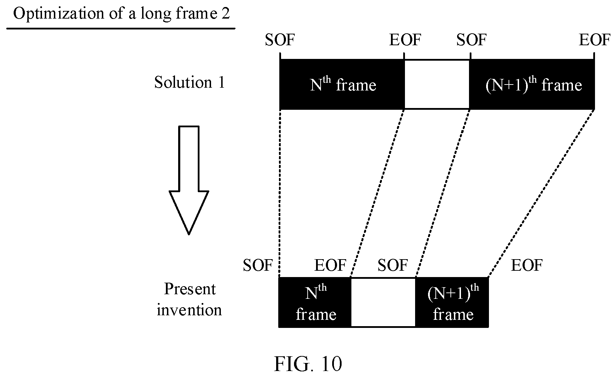

For example, refer to FIG. 10. In an existing solution shown in a solution 1, because the N^{th} frame is not displayed, a corresponding timestamp of the (N+1)^{th} frame is adjusted to a timestamp of the N^{th} frame, so that the display always displays the (N+1)^{th} frame of image in a corresponding display interval between the SOF of the N^{th} frame and the EOF of the (N+1)^{th} frame. Therefore, the long frame 2 appears. The long frame 2 corresponds to the duration between the SOF of the N^{th} frame of image and the EOF of the (N+1)^{th} frame of image. In this case, a lag caused due to long-time display of the (N+1)^{th} frame occurs.

Correspondingly, in some embodiments of this application, the electronic device may control frame lengths (that is, image output frame lengths) of the N^{th} frame and/or the (N+1)^{th} frame. For example, an adjusted frame length of the N^{th} frame may be less than the frame length of the N^{th} frame. For another example, an adjusted frame length of the (N+1)^{th} frame may be less than the frame length of the (N+1)^{th} frame. Therefore, the duration between the SOF of the N^{th} frame and the EOF of the (N+1)^{th} frame is shortened, to shorten a display duration of the (N+1)^{th} frame on the display. In other words, the duration of the long frame 2 is shortened, to optimize a lag caused due to the presence of the long frame 2.

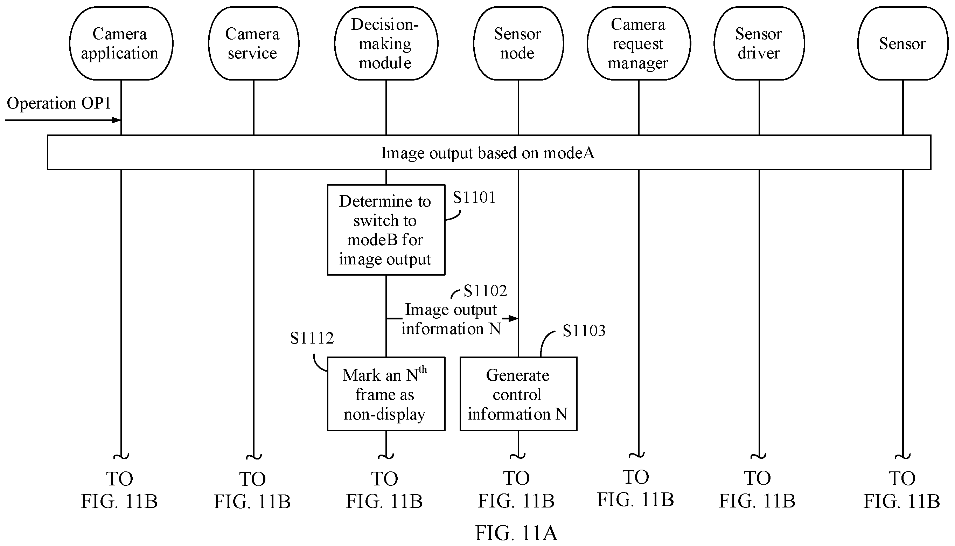

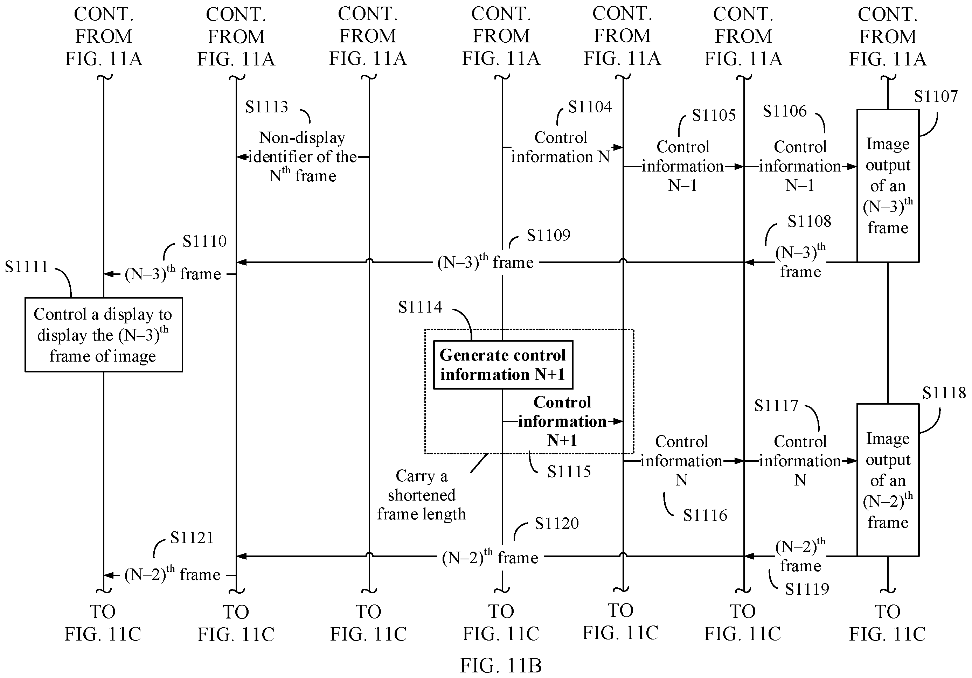

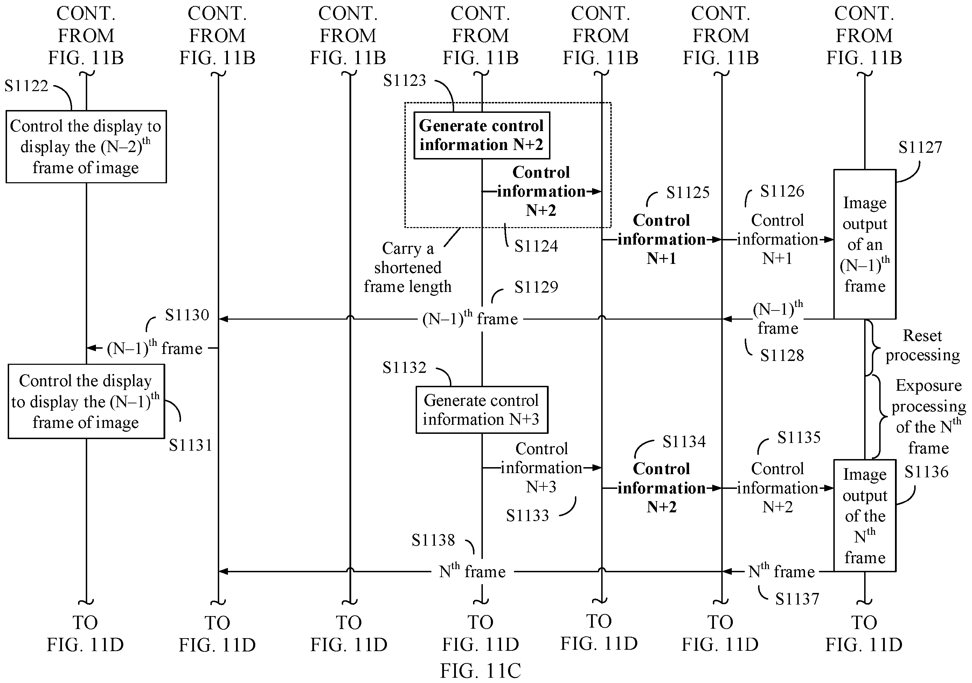

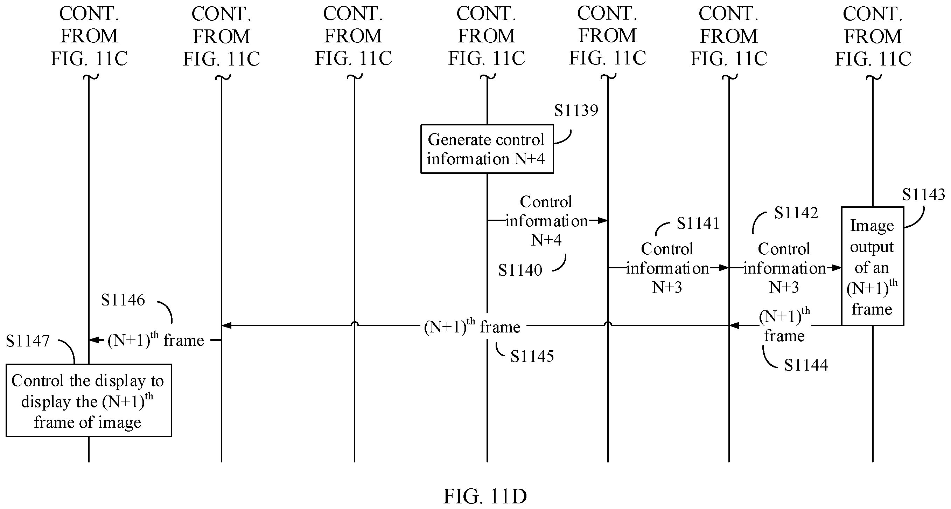

The solution implementation shown in FIG. 10 is described in detail below with reference to an interaction example in FIG. 11A, FIG. 11B, FIG. 11C, and FIG. 11D. For example, the N^{th} frame of image is a 1^{st} frame of image that is output based on modeB.

In addition, in the example shown in FIG. 11A, FIG. 11B, FIG. 11C, and FIG. 11D, that the frame lengths of both the N^{th} frame of image and the (N+1)^{th} frame of image are adjusted is used as an example.

As shown in FIG. 11A, FIG. 11B, FIG. 11C, and FIG. 11D, the solution may include the following steps:
S1101: A decision-making module determines to switch to modeB for image output.
S1102: The decision-making module sends image output information N to a sensor node.
S1103: The sensor node generates control information N.
S1104: The sensor node sends the control information N to a camera request manager (CRM).
S1105: The camera request manager sends control information N-1 to a sensor driver.
S1106: The sensor driver writes the control information N-1 into a sensor.
S1107: An (N-3)^{th} frame of image is output.
S1108: The sensor transmits the (N-3)^{th} frame of image to the sensor driver.
S1109: The sensor driver transmits the (N-3)^{th} frame of image to a camera service.
S1110: The camera service obtains a to-be-displayed image of the (N-3)^{th} frame of image, and transmits the to-be-displayed image to a camera application.
S1111: The camera application controls a display to display the (N-3)^{th} frame of image.
S1112: The decision-making module marks an N^{th} frame as non-display.
S1113: The decision-making module sends, to the camera service, an identifier indicating that the N^{th} frame is not displayed.

With reference to the solution description in FIG. 9A, FIG. 9B, and FIG. 9C, for execution of S1101 to S1113 in FIG. 11A, FIG. 11B, FIG. 11C, and FIG. 11D, refer to the description of S901 to S913 in FIG. 9A, FIG. 9B, and FIG. 9C. Details are not described herein again.

Therefore, image output and display of the (N-3)^{th} frame of image can be implemented. The (N-3)^{th} frame of image may be output based on an image output mode of modeA.

S1114: The sensor node generates control information N+1.

In this example, the control information N+1 is used as configuration information of an image output parameter of a switching frame, and may be one-frame effective. For example, the image output mode (such as modeB), exposure information, and an image output frame length in the control information N+1 may be one-frame effective. Therefore, the control information N+1 may take effect in an image output process of the N^{th} frame. In this way, a parameter configuration can be implemented for image output of the N^{th} frame of image based on the control information N+1.

The switching frame may be a 1^{st} frame when seamless switching is triggered, that is, the N^{th} frame.

In this example, the control information N+1 may include information indicating to perform image output based on modeB. The control information N+1 may further include exposure information of the N^{th} frame of image.

In some embodiments, the exposure information in the control information N+1 may be default exposure information Expo2, and a corresponding exposure duration may be an exposure duration ExpoT2.

In some other embodiments, as shown in the solution example in FIG. 9A, FIG. 9B, and FIG. 9C, the exposure information in the control information N+1 may be adjusted exposure information Expo3, and a corresponding exposure duration may be ExpoT3. ExpoT3 is less than ExpoT2.

In this embodiment, the control information N+1 may further include frame length information.

For example, the frame length information may include VTS information. The VTS information indicates a frame length during image output of the N^{th} frame of image.

It may be understood that frame length information carried in a request N+1 corresponding to the N^{th} frame may include default VTS1 in an existing solution (for example, the solution 1). For example, a current image output frame rate is 30 fps. VTS1 may indicate that a frame length of the N^{th} frame is 33 ms corresponding to 30 fps.

In this example, frame length information included in the control information N+1 may be VTS3. A frame length indicated by VTS3 may be less than the frame length indicated by VTS1.

In a possible implementation, when executing S1114, the sensor node may read a parameter configuration file, to obtain default VTS1 of the N^{th} frame.

In this embodiment of this application, the parameter configuration file may be preset in the electronic device. For example, the parameter configuration file may be an XML file. The parameter configuration file may store a default frame length corresponding to each frame of image. For example, the default frame length of the N^{th} frame is VTS1. For another example, the default frame length of the (N+1)^{th} frame is VTS2.

The sensor node may further determine VTS3 based on VTS 1. For example, the sensor node may determine, based on preconfigured logic, that VTS3 may be equal to (VTS1)/2. In this way, the frame length indicated by VTS3 may be equal to a half of 33 ms, that is, 16.5 ms.

For another example, the sensor node may determine, based on preconfigured logic, that VTS3 is a value greater than or equal to (VTS1)/2 and less than VTS1. A specific implementation may be flexibly adjusted based on an actual situation. In this way, the frame length indicated by VTS3 may be less than the frame length indicated by default VTS1.

In this way, when image output is performed based on VTS3, the frame length of the N^{th} frame of image may be controlled to be less than a default frame length (for example, equal to a half of the default frame length), thereby saving an image output time of the N^{th} frame of image.

Corresponding to the example in FIG. 10, image output of the N^{th} frame is performed based on the frame length including VTS3, to shorten a duration between a SOF and an EOF of the N^{th} frame of image. In comparison with an obvious solution, even if an image output duration of the (N+1)^{th} frame remains unchanged, a duration (that is, a duration of the long frame 2) between the SOF of the N^{th} frame and an EOF of the (N+1)^{th} frame may be shortened. In this way, effect of shortening a display time of the (N+1)^{th} frame of image can be achieved, thereby optimizing a lag caused by long-time display of the (N+1)^{th} frame of image.

S1115: The sensor node sends the control information N+1 to a camera request manager (CRM).

S1116: The camera request manager sends control information N to the sensor driver.

S1117: The sensor driver writes the control information N into the sensor.

S1118: An (N-2)^{th} frame of image is output.

S1119: The sensor transmits the (N-2)^{th} frame of image to the sensor driver.

S1120: The sensor driver transmits the (N-2)^{th} frame of image to the camera service.

S1121: The camera service obtains a to-be-displayed image of the (N-2)^{th} frame of image, and transmits the to-be-displayed image to the camera application.

S1122: The camera application controls the display to display the (N-2)^{th} frame of image.

For execution steps of S1115 to S1122, refer to an execution process of S915 to S922 in FIG. 9A, FIG. 9B, and FIG. 9C. Details are not described herein again.

In this way, image output and display of the (N-2)^{th} frame can be implemented. The (N-2)^{th} frame may still be output based on modeA. It may be understood that a KMD of the electronic device receives the control information N+1 in the image output process of the (N-2)^{th} frame. Therefore, the control information N+1 may be written into a register of the sensor in an image output process of a next frame.

S1123: The sensor node generates control information N+2.

For example, the control information N+2 may be or may include frame length information.

With reference to the foregoing description about effectiveness of the frame length information, the frame length information may be one-frame effective after being written into the register. In this way, when the control information N+2 is written into the register in the image output process of the (N-1)^{th} frame, the control information N+2 may be used to control the image output frame length of the (N+1)^{th} frame.

In some embodiments, a frame length in the control information N+2 may be VTS4. For a mechanism for obtaining VTS4, refer to a mechanism for obtaining VTS3 in S1114. For example, the sensor node may obtain, from the parameter configuration file, that a default image output frame length of the (N+1)^{th} frame is VTS2.

The sensor node may determine, based on VTS2, VTS4 actually carried in the control information N+2. For example, VTS4 may be in a range of [(VTS2)/2, VTS2). For another example, VTS4 may be equal to (VTS2)/2.

In this way, the image output frame length of the (N+1)^{th} frame can be controlled by using VTS4 carried in the control information N+2. Therefore, the image output frame length of the (N+1)^{th} frame is shortened, thereby achieving effect of shortening the long frame 2. In this way, a lag caused due to long-time display of the (N+1)^{th} frame corresponding to the long frame 2 on the display is resolved.

It may be understood that, with reference to the description of S1114 and S1123, control of the image output frame lengths of the N^{th} frame of image and the (N+1)^{th} frame of image can be implemented by controlling both the VTS in the control information N+1 and the VTS in the control information N+2, to significantly shorten the duration of the long frame 2.

In some other embodiments, the electronic device may also flexibly select to control the frame length of the N^{th} frame or the (N+1)^{th} frame. Therefore, when the frame length of the N^{th} frame or the (N+1)^{th} frame is shortened, effect of shortening the long frame 2 can be implemented in comparison with an existing solution. For a specific implementation, refer to S1114 or S1123 and subsequent description of corresponding steps. Details are not described in this application.

S1124: The sensor node sends the control information N+2 to the camera request manager (CRM).

S1125: The camera request manager sends control information N+1 to the sensor driver.

S1126: The sensor driver writes the control information N+1 into the sensor.

S1127: The (N-1)^{th} frame of image is output.

S1128: The sensor transmits the (N-1)^{th} frame of image to the sensor driver.

S1129: The sensor driver transmits the (N-1)^{th} frame of image to the camera service.

S1130: The camera service obtains a to-be-displayed image of the (N-1)^{th} frame of image, and transmits the to-be-displayed image to the camera application.

S1131: The camera application controls the display to display the (N-1)^{th} frame of image.

For an execution process of S1124 to S1131, refer to S924 to S931 in FIG. 9A, FIG. 9B, and FIG. 9C.

It may be understood that the control information N+1 may be written into the register of the sensor in the image output process of the (N-1)^{th} frame in this example. In this way, based on an one-frame effectiveness mechanism, the image output parameter (for example, the frame length is VTS3) in the control information N+1 may take effect in the image output process of the N^{th} frame, to control the image output frame length of the N^{th} frame of image.

S1132: The sensor node generates control information N+3.

S1133: The sensor node sends the control information N+3 to the camera request manager (CRM).

S1134: The camera request manager sends control information N+2 to the sensor driver.

S1135: The sensor driver writes the control information N+2 into the sensor.

S1136: The N^{th} frame of image is output.

S1137: The sensor transmits the N^{th} frame of image to the sensor driver.

S1138: The sensor driver transmits the N^{th} frame of image to the camera service.

For execution of S1132 to S1138, refer to S932 to S938 in FIG. 9A, FIG. 9B, and FIG. 9C.

In this example, the description of S1114 to S1126 is combined. In the image output process of the (N-1)^{th} frame, the control information N+1 that carries VTS3 is written into the register. Through effectiveness after one frame, VTS3 takes effect in a process of executing S1136. In this way, the image output frame length of the N^{th} frame may correspond to shortened VTS3. The duration between the SOF and the EOF in the image output process of N^{th} frame can be effectively shortened. Therefore, the duration of the long frame 2 is shortened.

In this procedure, the image output parameter in the control information N+3 may be used to configure image output of a subsequent image.

It may be understood that when the switching frame is the N^{th} frame, after control information of the subsequent frame of image is written into the register, a parameter such as exposure information is restored to be two-frame effective, and a parameter such as a frame length is one-frame effective.

Similarly, the frame length in the control information N+2 is one-frame effective. In this way, if the control information N+2 is written into the register in the image output process of the N^{th} frame, the frame length (such as VTS4) in the control information N+2 may take effect in the image output process of the (N+1)^{th} frame. For example, VTS4 is a half of default VTS2. In a process of performing the subsequent image output process of the (N+1)^{th} frame based on VTS4, a duration between a SOF and an EOF of the (N+1)^{th} frame can be effectively shortened, and the duration of the long frame 2 can be further shortened.

In addition, with reference to the description in FIG. 9A, FIG. 9B, and FIG. 9C, in some implementations, if the control information N+1 includes shortened exposure information, before S1136, the sensor may perform exposure on the N^{th} frame. The exposure duration is less than the default exposure duration, thereby shortening the long frame 1.

Certainly, in some other implementations, the exposure information in the control information N+1 may also be a default value. In this way, although the long frame 1 still exists, because the long frame 2 is shortened, a display lag after seamless switching is triggered can be effectively optimized.

S1139: The sensor node generates control information N+4.

S1140: The sensor node sends the control information N+4 to the camera request manager (CRM).

S1141: The camera request manager sends control information N+3 to the sensor driver.

S1142: The sensor driver writes the control information N+3 into the sensor.

S1143: The (N+1)^{th} frame of image is output.

S1144: The sensor transmits the (N+1)^{th} frame of image to the sensor driver.

S1145: The sensor driver transmits the (N+1)^{th} frame of image to the camera service.

S1146: The camera service obtains a to-be-displayed image of the (N+1)^{th} frame of image, and transmits the to-be-displayed image to the camera application.

S1147: The camera application controls the display to display the (N+1)^{th} frame of image.

Through an execution process of S1139 to S1147, image output and display of the (N+1)^{th} frame can be implemented, and delivery and writing of subsequent control information can be implemented. For a specific execution process, refer to the foregoing description about the (N-2)^{th} frame or the (N-1)^{th} frame.

It may be understood that in this example, the frame length information in the control information N+2 may be written into the register in the image output process of the N^{th} frame, and take effect after one frame. The frame length information takes effect in the image output process of the (N+1)^{th} frame (such as S1143).

For example, the frame length included in the control information N+2 includes VTS4, and VTS4 is equal to a half of default VTS2.

In the image output process of the (N+1)^{th} frame, the frame length may be shortened to a half of the default frame length, thereby shortening the duration between the SOF and the EOF of the (N+1)^{th} frame. Further, the duration between the SOF of the N^{th} frame and the EOF of the (N+1)^{th} frame is shortened. The duration between the SOF of the N^{th} frame and the EOF of the (N+1)^{th} frame is also the duration of the long frame 2, and corresponds to a display duration of the (N+1)^{th} frame on the display. In this way, by shortening the duration of the long frame 2, the display duration of the (N+1)^{th} frame on the display can be effectively shortened, thereby optimizing a lag problem caused due to the presence of the long frame 2.

Therefore, in this application, in the examples in FIG. 8 and FIG. 9A, FIG. 9B, and FIG. 9C, by controlling the exposure duration of the N^{th} frame, the duration of the long frame 1 is effectively shortened, and the display duration of the (N-1)^{th} frame on the display is further optimized. This optimizes a lag caused due to the presence of the long frame 1. As shown in the examples in FIG. 10 and FIG. 11A, FIG. 11B, FIG. 11C, and FIG. 11D, by controlling the image output frame length of the N^{th} frame and/or the (N+1)^{th} frame, the duration of the long frame 2 is effectively shortened, and the display duration of the (N+1)^{th} frame on the display is further optimized. This optimizes a lag caused due to the presence of the long frame 2.

In a specific implementation process, the foregoing solutions shown in FIG. 8 and FIG. 9A, FIG. 9B, and FIG. 9C or the solutions shown in FIG. 10 and FIG. 11A, FIG. 11B, FIG. 11C, and FIG. 11D may be used to optimize the long frame 1 or the long frame 2, to optimize a display lag problem after seamless switching is triggered. Alternatively, the foregoing solutions in FIG. 8 to FIG. 11A, FIG. 11B, FIG. 11C, and FIG. 11D may be all used to implement optimization of the long frame 1 and the long frame 2, to better optimize a display lag after seamless switching is triggered.

It should be noted that, in the foregoing embodiments, a manner of transmitting the control information may be implemented by using the request information in the foregoing example. For example, the control information is carried in the request information to implement transmission between modules. In addition, in some implementations, each image output parameter (such as an image output mode, exposure information, and an image output frame length) in the control information may be identified by using a form of a register address and a corresponding value. In this way, the request information carries a register address and a value that correspond to a parameter that needs to be configured, so that each component (such as a sensor driver) can write the corresponding value at the register address carried in the request information, to implement writing of the image output parameter.

The technical solutions provided in embodiments of this application may be applied to an electronic device of a user. The electronic device may include at least one of a mobile phone, a foldable electronic device, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an on-board device, a smart home device, and a smart city device. A specific type of the electronic device is not particularly limited in embodiments of this application.

It may be understood that, to implement the foregoing functions, the electronic device provided in embodiments of this application includes a hardware structure and/or a software module for performing each function. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or computer software driving hardware depends on particular applications and design constraints of the technical solutions. A person skilled in the art may use different methods to implement the described functions for each particular application, but it should not be considered that the implementation goes beyond the scope of embodiments of this application.

In embodiments of this application, the electronic device may be divided into functional modules based on the foregoing method examples. For example, each functional module may be obtained through division based on each corresponding function, or two or more functions may be integrated into one processing module. The foregoing integrated module may be implemented in a form of hardware, or may be implemented in a form of a software functional module. It should be noted that, in embodiments of this application, module division is an example, and is merely logical function division. In actual implementation, another division manner may be used.

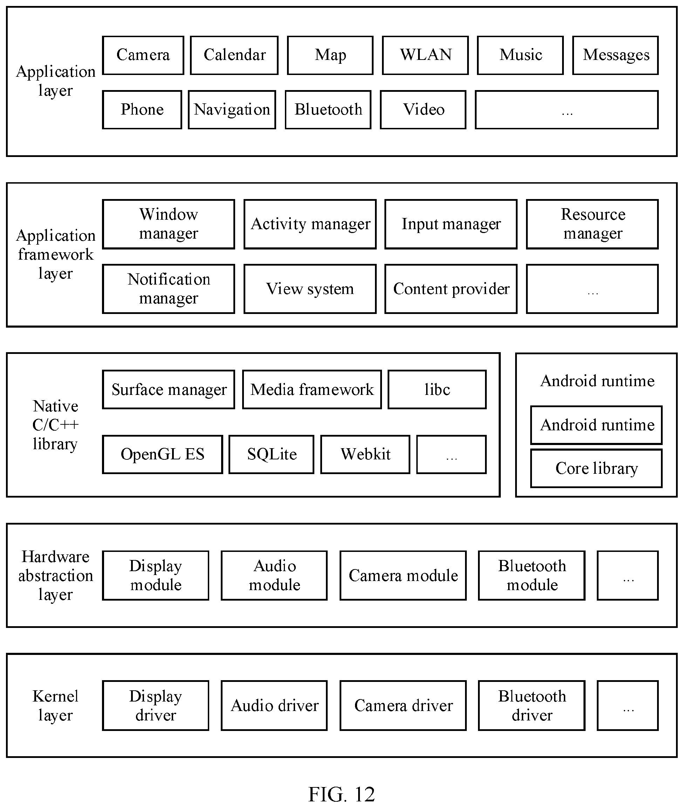

For example, in some embodiments, FIG. 12 is software composition of still another electronic device according to an embodiment of this application.

In this example, similar to the composition manner in FIG. 2, a software system of the electronic device may use a layered architecture, an event-driven architecture, a microkernel architecture, a micro service architecture, or a cloud architecture. In this embodiment of this application, an Android system with the layered architecture is used as an example to describe a software structure of the electronic device.

In the layered architecture, software is divided into several layers, and each layer has a clear role and task. The layers communicate with each other by using a software interface. In some embodiments, an Android system is divided into five layers: an application layer, an application framework layer, an Android runtime (Android runtime, ART) and a native C/C++ library, a hardware abstract layer (Hardware Abstract Layer, HAL), and a kernel layer from top to bottom.

The application layer may include a series of application packages.

As shown in FIG. 12, the application program packages may include application programs such as Camera, Calendar, Map, WLAN, Music, Messages, Phone, Navigation, Bluetooth, and Video.

The application framework layer provides an application programming interface (application programming interface, API) and a programming framework for an application at the application layer. The application framework layer includes some predefined functions.

As shown in FIG. 12, the application framework layer may include a window manager, a content provider, a view system, a resource manager, a notification manager, an activity manager, an input manager, and the like.

The Android runtime includes a core library and Android runtime. The Android runtime is responsible for converting source code into machine code. The Android runtime mainly includes an ahead-of-time (ahead or time, AOT) compilation technology and a just-in-time (just in time, JIT) compilation technology.

The core library is mainly used to provide basic Java class library functions, for example, a basic data structure, a mathematics library, an IO library, a tool library, a database library, a network library, and other libraries. The core library provides an API for a user to develop an Android application.

The native C/C++ library may include a plurality of functional modules, for example, a surface manager (surface manager), a media framework (Media Framework), libc, OpenGL ES, SQLite, and WebKit.

The hardware abstraction layer runs in user space (user space), encapsulates a kernel layer drive, and provides a call interface to an upper layer. For example, the hardware abstraction layer may include a display module, an audio module, a camera module, and a Bluetooth module.

The kernel layer is a layer between hardware and software. The kernel layer includes at least a display driver, a camera driver, an audio driver, and a Bluetooth driver.

In some other embodiments of this application further provides hardware composition of an electronic device.

For example, the electronic device may include a processor, an interface for external memory, an internal memory, a universal serial bus (universal serial bus, USB) interface, a charging management module, a power management module, a battery, an antenna 1, an antenna 2, a mobile communication module, a wireless communication module, an audio module, a speaker, a receiver, a microphone, a headset jack, a sensor module, a button, a motor, an indicator, a camera, a display, and a subscriber identity module (subscriber identification module, SIM) card interface. The sensor module may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor 180L, a bone conduction sensor, and the like.

The processor may include one or more processing units. For example, the processor may include an application processor (application processor, AP), a modem processor (Modem), a graphics processing unit (graphics processing unit, GPU), an image signal processor (image signal processor, ISP), a controller, a video codec, a digital signal processor (digital signal processor, DSP), a baseband processor (baseband processor, BP or BBP), and/or a neural-network processing unit (neural-network processing unit, NPU). Different processing units may be independent components, or may be integrated into one or more processors.

It should be noted that a structure shown in this embodiment of this application does not constitute specific limitation on the electronic device. In some other embodiments of this application, the electronic device may include more or fewer components, or some components may be combined, or some components may be split, or components are arranged in different manners. The foregoing components may be implemented by using hardware, software, or a combination of software and hardware.

The above mainly describes the solutions provided in embodiments of this application from a perspective of each functional module. A person skilled in the art should be easily aware that in combination with the units and algorithm steps of the examples described in the embodiments disclosed herein, this application can be implemented by hardware or a combination of hardware and computer software. Whether a function is performed by hardware or computer software driving hardware depends on particular applications and design constraints of the technical solutions. A person skilled in the art may use different methods to implement the described functions for each particular application, but it should not be considered that the implementation goes beyond the scope of this application.

The foregoing integrated module may be implemented in a form of hardware, or may be implemented in a form of a software functional module. It should be noted that, in embodiments of this application, module division is an example, and is merely logical function division. In actual implementation, another division manner may be used.

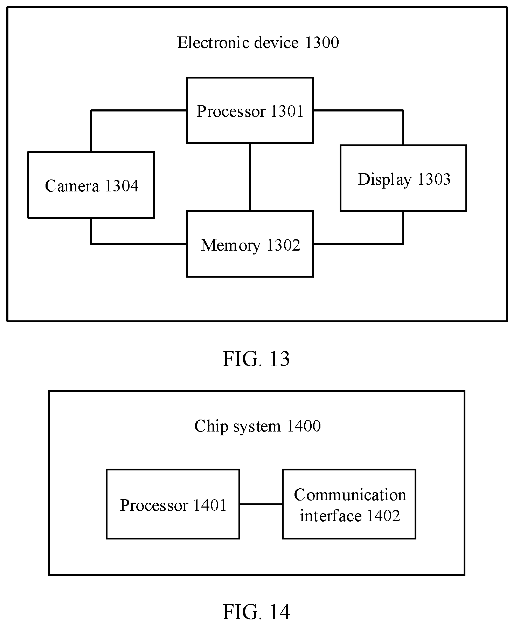

For example, FIG. 13 is a composition diagram of an electronic device 1300. As shown in FIG. 13, the electronic device 1300 may include a processor 1301 and a memory 1302. The memory 1302 is configured to store computer-executable instructions. In an example, in some embodiments, the processor 1301 may enable the electronic device 1300 to perform any method shown in the foregoing embodiments when executing the instructions stored in the memory 1302.

In some implementations, as shown in FIG. 13, the electronic device 1300 may be further configured with a display 1303, and there may be one or more displays 1303. The display 1303 may be separately coupled to the processor 1301 and the memory 1302, so that the display 1303 cooperates with the processor 1301 and the memory 1302 to implement the technical solutions provided in the foregoing embodiments.

In some implementations, as shown in FIG. 13, the electronic device 1300 may be further configured with a camera 1304, and there may be one or more cameras 1304. Each camera 1304 may be configured with a corresponding image sensor. The camera 1304 may be separately coupled to the processor 1301 and the memory 1302, so that the camera 1304 cooperates with the processor 1301 and the memory 1302 to implement the technical solutions provided in the foregoing embodiments.

It should be noted that all related content of the steps in the foregoing method embodiment may be cited in function descriptions of corresponding functional modules. Details are not described herein again.

FIG. 14 is a composition diagram of a chip system 1400. The chip system 1400 may include a processor 1401 and a communication interface 1402, and is configured to support a related device in implementing the functions in the foregoing embodiments. In a possible design, the chip system further includes a memory, configured to store program instructions and data that are necessary for the electronic device. The chip system may include a chip, or may include a chip and another discrete device. It should be noted that, in some implementations of this application, the communication interface 1402 may also be referred to as an interface circuit.

It should be noted that all related content of the steps in the foregoing method embodiment may be cited in function descriptions of corresponding functional modules. Details are not described herein again.

An embodiment of this application further provides a computer-readable storage medium. The computer-readable storage medium stores a computer program. When the computer program is executed by a computer, the method procedure related to the electronic device in any method embodiment is implemented. Specifically, the computer may be the foregoing electronic device.

An embodiment of this application further provides a computer program or a computer program product including a computer program. When the computer program is executed on a specific computer, the computer is enabled to implement a method procedure related to an electronic device in any one of the foregoing method embodiments. Specifically, the computer may be the foregoing electronic device.

All or a part of the functions or actions or operations or steps in the above embodiments may be implemented by software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to specific features and embodiments thereof, it is clear that various modifications and combinations may be made to this application without departing from the spirit and scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A data processing method, applied to an electronic device, wherein the electronic device comprises a camera application and an image sensor, and the method comprises:
starting the camera application at a first moment;
performing, by the image sensor, image output based on a first image output mode and a first exposure duration;
obtaining first control information at a second moment, wherein the first control information comprises a first image output parameter, the first image output parameter comprises a second exposure duration and a second image output mode, the second exposure duration is less than the first exposure duration, the second image output mode is different from the first image output mode, and the second moment is later than the first moment;
performing, by the image sensor, exposure based on the second exposure duration at a third moment, wherein the third moment is later than the second moment; and
performing, by the image sensor, image output based on the second image output mode at a fourth moment, wherein the fourth moment is later than the third moment.

2. The method according to claim 1, wherein performing, by the image sensor, image output based on the second image output mode comprises:
outputting, by the image sensor, an N^{th} frame of image based on the second image output mode, wherein the first exposure duration is the same as an exposure duration of an (N-1)^{th} frame, and the N^{th} frame of image is a 1^{st} frame of image output by the image sensor after switching to the second image output mode.

3. The method according to claim 2, wherein the second moment is earlier than a moment corresponding to a SOF (start of frame) of the (N-1)^{th} frame of image.

4. The method according to claim 2 or 3, wherein the third moment is between a moment corresponding to an EOF (end of frame) of the (N-1)^{th} frame of image and a moment corresponding to a SOF of the N^{th} frame of image.

5. The method according to any one of claims 2 to 4, wherein the fourth moment is the moment corresponding to the SOF of the N^{th} frame of image.

6. The method according to any one of claims 2 to 5, wherein the first control information corresponds to information of a request N+1.

7. The method according to any one of claims 1 to 6, wherein the method further comprises:
writing the first control information into a first register at a fifth moment, wherein the first register is a register of the image sensor, the fifth moment is later than the second moment, and the fifth moment is earlier than the third moment.

8. The method according to claim 7, wherein the first control information comprises a first address and a first value, the first address is an address at which the image sensor stores an exposure duration, and the first value corresponds to the second exposure duration; and
writing the first control information into the first register comprises:
writing the first value at the first address of the first register.

9. The method according to claim 8, wherein the fifth moment is between the moment corresponding to the SOF of the (N-1)^{th} frame of image and the moment corresponding to the EOF.

10. The method according to any one of claims 7 to 9, wherein the electronic device is configured with a camera request management module CRM;
obtaining the first control information comprises:
obtaining, by the CRM, the first control information at the second moment; and
writing the first control information into the first register comprises:
writing, by the CRM, the first control information into the first register at the fifth moment.

11. The method according to any one of claims 1 to 10, wherein before generating the first control information, the method further comprises:
determining the second exposure duration.

12. The method according to claim 11, wherein
before determining the second exposure duration, the method further comprises:
obtaining the first exposure duration; and
determining the second exposure duration comprises:
determining the second exposure duration based on the first exposure duration, so that the second exposure duration is less than the first exposure duration.

13. The method according to claim 12, wherein
the method further comprises: obtaining a first exposure gain, wherein the first exposure gain is an exposure gain used when the image sensor performs image output based on the first image output mode; and
determining the second exposure duration based on the first exposure duration comprises:
determining the second exposure duration based on the first exposure duration and the first exposure gain.

14. The method according to claim 13, wherein the first control information further comprises a second exposure gain, and a product of the second exposure gain and the second exposure duration is equal to a product of the first exposure gain and the first exposure duration; and
performing, by the image sensor, exposure based on the second exposure duration comprises:
performing, by the image sensor, exposure based on the second exposure duration and the second exposure gain.

15. The method according to claim 13 or 14, wherein the second exposure gain is a maximum exposure gain of the image sensor.

16. A data processing method, applied to an electronic device, wherein the electronic device comprises a camera application and an image sensor, and the method comprises:
starting the camera application at a first moment;
performing, by the image sensor, image output based on a first image output mode;
obtaining first control information at a second moment, wherein the first control information comprises a first image output parameter, the first image output parameter comprises a first frame length and a second image output mode, the first frame length is less than a second frame length, the second frame length is a frame length that is configured for the image sensor and that is for image output based on the second image output mode, the second image output mode is different from the first image output mode, and the second moment is later than the first moment; and
performing, by the image sensor, image output based on the second image output mode and the first frame length at a fourth moment, wherein the fourth moment is later than the third moment.

17. The method according to claim 16, wherein the fourth moment is a moment corresponding to a SOF of the N^{th} frame of image, and the second frame length is a frame length that is configured for the image sensor and that is for outputting the N^{th} frame of image based on the second image output mode; and
performing, by the image sensor, image output based on the second image output mode and the first frame length comprises:
outputting, by the image sensor, the N^{th} frame of image based on the second image output mode and the first frame length, wherein the N^{th} frame of image is a 1^{st} frame of image output by the image sensor after switching to the second image output mode.

18. The method according to claim 17, wherein the second moment is earlier than a moment corresponding to a SOF of an (N-1)^{th} frame of image.

19. The method according to claim 17 or 18, wherein the first control information corresponds to information of a request N+1.

20. The method according to any one of claims 16 to 19, wherein the method further comprises:
writing the first control information into a first register at a fifth moment, wherein the first register is a register of the image sensor, the fifth moment is later than the second moment, and the fifth moment is earlier than the third moment.

21. The method according to claim 20, wherein
the first control information comprises a second address and a second value, the second address is an address at which the image sensor stores a frame length, and the second value corresponds to the first frame length; and
writing the first control information into the first register comprises:
writing the second value at the second address of the first register.

22. The method according to claim 20 or 21, wherein the electronic device is configured with a camera request management module CRM;
obtaining the first control information comprises:
obtaining, by the CRM, the first control information at the second moment; and
writing the first control information into the first register comprises:
writing, by the CRM, the first control information into the first register at the fifth moment.

23. The method according to any one of claims 20 to 22, wherein
the fifth moment is between the moment corresponding to the SOF of the (N-1)^{th} frame of image and a moment corresponding to an EOF.

24. The method according to any one of claims 16 to 23, wherein the first frame length is less than the second frame length, and the first frame length is greater than or equal to a half of the second frame length.

25. The method according to any one of claims 16 to 24, wherein before generating the first control information, the method further comprises:
determining the first frame length.

26. The method according to claim 25, wherein
after determining the first frame length, the method further comprises:
obtaining the second frame length; and
determining the first frame length comprises:
determining the first frame length based on the second frame length.

27. The method according to claim 26, wherein obtaining the second frame length comprises:
reading a parameter configuration file, and obtaining the second frame length, wherein the parameter configuration file is stored in the electronic device.

28. The method according to claim 26 or 27, wherein determining the first frame length based on the second frame length comprises:
determining a half of the second frame length as the first frame length.

29. The method according to any one of claims 16 to 28, wherein the method further comprises:
generating second control information at a sixth moment, wherein the second control information comprises a second image output parameter, the second image output parameter comprises a third frame length, the third frame length is less than a fourth frame length, the fourth frame length is a frame length that is configured for the image sensor and that is for outputting an (N+1)^{th} frame of image based on the second image output mode, and the sixth moment is later than the second moment; and
outputting, by the image sensor, the (N+1)^{th} frame of image based on the second image output mode and the third frame length at a seventh moment, wherein the seventh moment is later than the fourth moment.

30. The method according to claim 29, wherein the third frame length is greater than or equal to a half of the fourth frame length.

31. The method according to claim 29 or 30, wherein the sixth moment is earlier than the moment corresponding to the SOF of the N^{th} frame of image.

32. The method according to any one of claims 29 to 31, wherein the seventh moment is a moment corresponding to a SOF of the (N+1)^{th} frame of image.

33. The method according to any one of claims 29 to 32, wherein the method further comprises:
writing the third frame length into a register of the image sensor at an eighth moment, wherein the eighth moment is between the moment corresponding to the SOF of the N^{th} frame of image and a moment corresponding to an EOF.

34. The method according to any one of claims 29 to 33, wherein the second control information corresponds to information of a request N+2.

35. An electronic device, wherein the electronic device comprises a memory, one or more processors, and one or more cameras, and each camera is configured with a corresponding image sensor;
the memory is coupled to the processor and the image sensor; and
the memory is configured to store computer program code, the computer program code comprises computer instructions, and when the processor executes the computer instructions, the electronic device is enabled to perform the method according to any one of claims 1 to 15, and/or perform the method according to any one of claims 16 to 34, to control the image sensor to output an image.

36. A chip system, wherein the chip system is applied to an electronic device; the chip system comprises one or more interface circuits and one or more processors; the interface circuit is interconnected to the processor through a line; the interface circuit is configured to receive a signal from a memory of the electronic device, and send the signal to the processor, wherein the signal comprises computer instructions stored in the memory; and when the processor executes the computer instructions, the electronic device performs the method according to any one of claims 1 to 15, and/or perform the method according to any one of claims 16 to 34.

37. A computer-readable storage medium, comprising computer instructions, wherein when the computer instructions are run on an electronic device, the electronic device is enabled to perform the method according to any one of claims 1 to 15, and/or perform the method according to any one of claims 16 to 34.

38. A computer program product, wherein when the computer program product runs on a computer, the computer is enabled to perform the method according to any one of claims 1 to 15, and/or the method according to any one of claims 16 to 34.
